# EUROPEAN PATENT SPECIFICATION

(11) **EP 3 905 753 B1**
(45) Date of publication and mention of the grant of the patent: **01.04.2026**
(21) Application number: 19906093.0
(22) Date of filing: 18.12.2019
(51) Int. Cl.: H04L 5/00, H04W 76/28, H04W 72/23, H04W 52/02

(54) **DCI TRANSMISSION METHOD, TERMINAL, AND NETWORK-SIDE DEVICE**
VERFAHREN ZUR DCI-ÜBERTRAGUNG, ENDGERÄT UND NETZWERKSEITIGE VORRICHTUNG
PROCÉDÉ DE TRANSMISSION DCI, TERMINAL ET DISPOSITIF CÔTÉ RÉSEAU

(30) Priority: 28.12.2018 CN 201811628988
(43) Date of publication of application: 03.11.2021
(73) Proprietor: Datang Mobile Communications Equipment Co., Ltd., Beijing 100083 (CN)
(72) Inventor: WANG, Jiaqing, Beijing 100191 (CN); CHENG, Fangchen, Beijing 100191 (CN); YANG, Meiying, Beijing 100191 (CN); LUO, Chen, Beijing 100191 (CN)
(74) Representative: Studio Torta S.p.A.
(86) International application number: PCT/CN2019/126271
(87) International publication number: WO 2020/135181

(56) References cited:
- WO-A1-2014/073799
- WO-A1-2018/055997
- CN-A- 108 093 495
- US-A1- 2017 086 172
- US-A1- 2018 145 800
- US-A1- 2018 368 112
- CATT: "Offline Discussion on UE Power Saving Schemes", 3GPP DRAFT; R1-1814148_OFFLINE_2 OF AI-7.2.9.2.1 UE ADAPTATION_POWER SAVING SCHEME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, U.S.A.; 20181112 - 20181116, 19 November 2018 (2018-11-19), Mobile Competence Centre ; 650, route des Lucioles ; F-06921 Sophia-Antipolis Cedex ; France, XP051494605
- APPLE INC.: "Network-indication based Approaches for UE Power Saving", 3GPP DRAFT; R1-1811127 NETWORK-INDICATION BASED APPROACHES FOR UE POWER SAVING.V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20181008 - 20181012, 29 September 2018 (2018-09-29), Mobile Competence Centre ; 650, route des Lucioles ; F-06921 Sophia-Antipolis Cedex ; France, XP051518529

## Description

### TECHNICAL FIELD

The present disclosure relates to the field of communication technology, in particular to a downlink control information (DCI) transmission and reception methods, a terminal and a networkside device.

### BACKGROUND

The 5G New Radio (NR) system supports larger bandwidth, higher throughput, more complex services, and more complex processing technologies. In addition, a terminal in an idle state (RRC_IDLE), an inactive state (RRC_Inactive) and a connected state (RRC_Connected) needs to detect the downlink control channel. The physical downlink control channel (PDCCH) detection implemented by the terminal is pre-configured, which leads to poor flexibility in PDCCH monitoring by the terminal.

Document US20180368112A1 discloses a downlink control information (DCI), such as a blanking DCI (bDCI) message, which may be transmitted by a base station (e.g., eNB) and received by a mobile device (e.g., UE). The bDCI may indicate that the eNB will not transmit a subsequent DCI to the UE for a duration of time.

Document WO2018055997A1 discloses a terminal device for performing discontinuous reception (DRX), which monitors both a PDCCH for C-RNTI and a PDCCH for CC-RNTI for a DRX-related active time and monitors a PDCCH for CC-RNTI in a CC-RNTI monitoring window period. The CC-RNTI monitoring window is started in a subframe n-X+1, and when a second PDCCH is detected in a subframe n-X+v or a subframe up to the subframe n-X+v, the CC-RNTI monitoring window is terminated in the subframe n in which the second PDCCH is detected, or when the second PDCCH is not detected in the subframe n-X+v or the subframe up to the subframe n-X+v, the CC-RNTI monitoring window is terminated in the subframe n-X+v.

Document US20170086172A1 discloses a wireless device that receives a downlink control information (DCI) on a primary cell. The DCI may comprise a field instructing a wireless device to activate a secondary cell. The wireless device activates the secondary cell in response to receiving the DCI.

### SUMMARY

The present invention relates to a DCI transmission and reception methods, a terminal and a network device according to the appended set of claims, so as to solve the problem that the flexibility of the PDCCH monitoring is poor.

Some embodiments of the present disclosure provides a DCI transmission method according to the appended set of claims, includes: receiving, by a terminal, a first DCI sent by a network device, wherein the first DCI includes first indication information, and the first indication information is used to indicate the terminal not to perform physical downlink control channel (PDCCH) monitoring for subsequent N monitoring opportunities, or used to indicate the terminal to perform the PDCCH monitoring at a next monitoring opportunity, or used to indicate the terminal to stop the PDCCH monitoring at least within a current Discontinuous Reception (DRX) on duration, wherein N is an integer greater than or equal to 1; and if the first DCI is decoded successfully, responding, by the terminal, to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Optionally, in the case that the first indication information is used to indicate to stop the PDCCH monitoring at least within the current DRX on duration, the first DCI and a physical downlink shared channel (PDSCH) are not transmitted in a same transmission time interval (TTI), or the indication information is used to indicate to stop the PDCCH monitoring at least within the current DRX on duration, and the first DCI and a non-physical layer signaling used to indicate to stop the PDCCH monitoring at least within the current DRX on duration are transmitted in the same TTI, or the first DCI and the non-physical layer signaling are not transmitted in the same TTI.

Optionally, if the first DCI is decoded successfully, the responding, by the terminal, to the first indication information includes: if the first DCI is decoded successfully, and an effective time of the first DCI is earlier than an effective time of the non-physical layer signaling, stopping the PDCCH monitoring at least within the current DRX on duration according to the first DCI; or if the first DCI is decoded successfully, feeding back, by the terminal, an ACK corresponding to the non-physical layer signaling to the network device, and stopping the PDCCH monitoring at least within the current DRX on duration according to the first DCI.

Optionally, the method further includes: in the case that the first DCI and the non-physical layer signaling are not transmitted in the same TTI, the first DCI is not successfully decoded, and the non-physical layer signaling is not successfully decoded, if the terminal returns an NACK corresponding to the non-physical layer signaling to the network device, receiving, by the terminal, a second DCI sent by the network device, wherein the second DCI includes second indication information, the second indication information is used to indicate the terminal not to perform the PDCCH monitoring for subsequent M monitoring opportunities, or is used to indicate to perform the PDCCH monitoring at the next monitoring opportunity, or is used to indicate to stop the PDCCH monitoring at least within the current DRX on duration, wherein M is an integer greater than or equal to 1.

Optionally, the method further includes: if the first DCI is not successfully decoded, receiving, by the terminal, a third DCI sent by the network device, wherein the third DCI includes third indication information, and the third indication information is used to indicate the terminal not to perform the PDCCH monitoring for subsequent W monitoring opportunities, or used to indicate to perform the PDCCH monitoring at the next monitoring opportunity, or used to indicate to stop the PDCCH monitoring at least within the current DRX on duration, wherein W is an integer greater than or equal to 1.

Optionally, a receiving time of the third DCI is before an end position of the N monitoring opportunities indicated by the first DCI; or the receiving time of the third DCI is within the current DRX on duration.

Optionally, the value of N is configured statically, semi-statically or dynamically by the network device.

Optionally, in the case that the N is statically or semi-statically configured by the network device, the terminal obtains a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

Some embodiments of the present disclose provides a DCI transmission method according to the appended set of claims, includes: sending, by a network device, a first DCI to a terminal, wherein the first DCI includes first indication information, and the first indication information is used to indicate the terminal not to perform PDCCH monitoring for subsequent N monitoring opportunities, or used to indicate the terminal to perform the PDCCH monitoring at a next monitoring opportunity, or used to indicate the terminal to stop the PDCCH monitoring at least within a current DRX on duration, wherein N is an integer greater than or equal to 1; if the terminal successfully decodes the first DCI, responding, by the network device, to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Optionally, in the case that the first indication information is used to indicate to stop the PDCCH monitoring at least within the current DRX on duration, the first DCI and PDSCH are not transmitted in a same TTI, or the indication information is used to indicate to stop the PDCCH monitoring at least within the current DRX on duration, and the first DCI and a non-physical layer signaling used to indicate to stop the PDCCH monitoring at least within the current DRX on duration are transmitted in the same TTI, or the first DCI and the non-physical layer signaling are not transmitted in the same TTI.

Optionally, if the terminal successfully decodes the first DCI, the responding, by the network device, to the first indication information includes: if the terminal successfully decodes the first DCI and an effective time of the first DCI is earlier than an effective time of the non-physical layer signaling, stopping PDCCH transmission for the terminal at least within the current DRX on duration according to the first DCI; or if the network device receives an ACK corresponding to the non-physical layer signaling fed back by the terminal, not performing PDCCH transmission for the terminal at least within the current DRX on duration according to the first DCI, and stopping sending the non-physical layer signaling, wherein the ACK indicates that the terminal successfully decodes the first DCI.

Optionally, the method further includes: in the case that the first DCI and the non-physical layer signaling are not transmitted in the same TTI, if the network device receives an NACK corresponding to the non-physical layer signaling returned by the terminal, sending, by the network device, a second DCI to the terminal, wherein the second DCI includes second indication information, and the second indication information is used to indicate the terminal not to perform PDCCH monitoring for subsequent M monitoring opportunities, or is used to indicate to perform the PDCCH monitoring at the next monitoring opportunity, or is used to indicate to stop the PDCCH monitoring at least within the current DRX on duration, the M is an integer greater than or equal to 1, and the NACK indicates that the terminal did not successfully decode the first DCI, and the non-physical layer signaling is not decoded successfully.

Optionally, the method further includes: if the network device does not detect Hybrid Automatic Repeat Request Acknowledge (HARQ-ACK), sending a third DCI to the terminal, wherein the third DCI includes third indication information, and the third indication information is used to indicate the terminal not to perform the PDCCH monitoring for subsequent W monitoring opportunities, or is used to indicate to perform the PDCCH monitoring at the next monitoring opportunity, or is used to indicate to stop the PDCCH monitoring at least within the current DRX on duration, and the W is an integer greater than or equal to 1; or, in the case that the first DCI is used to indicate the terminal not to perform the PDCCH monitoring for the subsequent N monitoring opportunities, or the first DCI is used to indicate to stop the PDCCH monitoring at least within the current DRX on duration, and the first DCI and the PDSCH are transmitted within the same TTI, the method further includes: if the network device detects an NACK corresponding to the PDSCH, stopping, by the network device, downlink transmission of the terminal.

Optionally, a sending time of the third DCI is before an end position of the N monitoring opportunities indicated by the first DCI; or the sending time of the third DCI is within the current DRX on duration.

Optionally, the value of N is configured statically, semi-statically or dynamically by the network device.

Optionally, in the case that N is statically or semi-statically configured by the network device, the terminal obtains a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtains the plurality of candidate values corresponding to N in advance, the network device sends fourth indication information to the terminal, the fourth indication information is used to indicate a target candidate value among the plurality of candidate values, and the first indication information is also used to indicate that the value of N is the target candidate value.

Some embodiment of the present disclosure further provides a terminal, includes: a first receiving module, configured to receive a first DCI sent by a network device, wherein the first DCI includes first indication information, and the first indication information is used to indicate the terminal not to perform physical downlink control channel (PDCCH) monitoring for subsequent N monitoring opportunities, or used to indicate the terminal to perform the PDCCH monitoring at a next monitoring opportunity, or used to indicate the terminal to stop the PDCCH monitoring at least within a current Discontinuous Reception (DRX) on duration, wherein N is an integer greater than or equal to 1; a responding module, configured to, if the first DCI is decoded successfully, respond, by the terminal, to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Some embodiments of the present disclosure provides a network device, includes: a first sending module according to the appended set of claims, configured to send a first DCI to a terminal, wherein the first DCI includes first indication information, and the first indication information is used to indicate the terminal not to perform PDCCH monitoring for subsequent N monitoring opportunities, or used to indicate the terminal to perform the PDCCH monitoring at a next monitoring opportunity, or used to indicate the terminal to stop the PDCCH monitoring at least within a current DRX on duration, wherein N is an integer greater than or equal to 1; a responding module, configured to, if the terminal successfully decodes the first DCI, respond, by the network device, to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Some embodiments of the present disclosure provides a terminal, includes: a transceiver, a memory, a processor, and a program stored on the memory and executed by the processor, wherein: the transceiver is configured to receive a first DCI sent by a network device, wherein the first DCI includes first indication information, and the first indication information is used to indicate the terminal not to perform physical downlink control channel (PDCCH) monitoring for subsequent N monitoring opportunities, or used to indicate the terminal to perform the PDCCH monitoring at a next monitoring opportunity, or used to indicate the terminal to stop the PDCCH monitoring at least within a current Discontinuous Reception (DRX) on duration, wherein N is an integer greater than or equal to 1; if the first DCI is decoded successfully, respond, by the terminal, to the first indication information; or, the transceiver is configured to receive a first DCI sent by a network device, wherein the first DCI includes first indication information, and the first indication information is used to indicate the terminal not to perform physical downlink control channel (PDCCH) monitoring for subsequent N monitoring opportunities, or used to indicate the terminal to perform the PDCCH monitoring at a next monitoring opportunity, or used to indicate the terminal to stop the PDCCH monitoring at least within a current Discontinuous Reception (DRX) on duration, wherein N is an integer greater than or equal to 1; the processor is configured to, if the first DCI is decoded successfully, respond to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Some embodiments of the present disclosure provides a network device, comprising: a transceiver, a memory, a processor, and a program stored on the memory and executed by the processor, wherein: the transceiver is configured to send a first DCI to a terminal, wherein the first DCI includes first indication information, and the first indication information is used to indicate the terminal not to perform PDCCH monitoring for subsequent N monitoring opportunities, or used to indicate the terminal to perform the PDCCH monitoring at a next monitoring opportunity, or used to indicate the terminal to stop the PDCCH monitoring at least within a current DRX on duration, wherein N is an integer greater than or equal to 1; if the terminal successfully decodes the first DCI, respond, by the network device, to the first indication information; or, the transceiver is configured to send a first DCI to a terminal, wherein the first DCI includes first indication information, and the first indication information is used to indicate the terminal not to perform PDCCH monitoring for subsequent N monitoring opportunities, or used to indicate the terminal to perform the PDCCH monitoring at a next monitoring opportunity, or used to indicate the terminal to stop the PDCCH monitoring at least within a current DRX on duration, wherein N is an integer greater than or equal to 1; the processor is configured to, if the terminal successfully decodes the first DCI, respond to the first indication information.

The first indication information includes a monitoring status field; the monitoring status field is used to indicate one of three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or the monitoring status field is used to indicate one of two states, and the two states include: a first state where the PDCCH monitoring is not performed for the subsequent N monitoring opportunities and a second state where the PDCCH monitoring is performed at the next monitoring opportunity.

Optionally, the first indication information includes an indication field, and the indication field is used to indicate to stop the PDCCH monitoring at least within the current DRX on duration.

Some embodiments of the present disclose provides a computer-readable storage medium on which a computer program is stored, wherein the program is executed by a processor to implement the steps of the DCI transmission method.

In some embodiments of the present disclosure, a terminal receives the first DCI sent by a network device, the first DCI includes first indication information, and the first indication information is used to indicate the terminal not to perform the PDCCH monitoring on subsequent N monitoring opportunities, or is used to indicate to perform the PDCCH monitoring at the next monitoring opportunity, or is used to indicate to stop the PDCCH monitoring at least within the current DRX on duration, wherein N is an integer greater than or equal to 1. If the first DCI is decoded successfully, then the terminal responds to the first indication information. Therefore, the PDCCH monitoring flexibility of the terminal can be improved through the above-mentioned first DCI, and the power consumption of the terminal can be further reduced.

### BRIEF DESCRIPTION OF THE DRAWINGS

FIG. 1 is a schematic diagram of a network structure applicable to some embodiments of the present disclosure;
FIG. 2 is a flowchart of a DCI transmission method provided by some embodiments of the present disclosure;
FIG. 3 is another flowchart of a DCI transmission method provided by some embodiments of the present disclosure;
FIG. 4 is a schematic diagram of PDCCH monitoring provided by some embodiments of the present disclosure;
FIG. 5 is another schematic diagram of PDCCH monitoring provided by some embodiments of the present disclosure;
FIG. 6 is a structural diagram of a terminal provided by some embodiments of the present disclosure;
FIG. 7 is another structural diagram of a terminal provided by some embodiments of the present disclosure;
FIG. 8 is yet another structural diagram of a terminal provided by some embodiments of the present disclosure;
FIG. 9 is a structural diagram of a network device provided by some embodiments of the present disclosure;
FIG. 10 is another structural diagram of a network device provided by some embodiments of the present disclosure;
FIG. 11 is yet another structural diagram of a network device provided by some embodiments of the present disclosure;
FIG. 12 is still yet another structural diagram of a network device provided by some embodiments of the present disclosure;
FIG. 13 is still yet another structural diagram of a terminal provided by some embodiments of the present disclosure; and
FIG. 14 is still yet another structural diagram of a network device provided by some embodiments of the present disclosure.

### DETAILED DESCRIPTION

In order to make the technical problems, technical solutions, and advantages to be solved by the present disclosure clearer, a detailed description will be given below in conjunction with the accompanying drawings and specific embodiments.

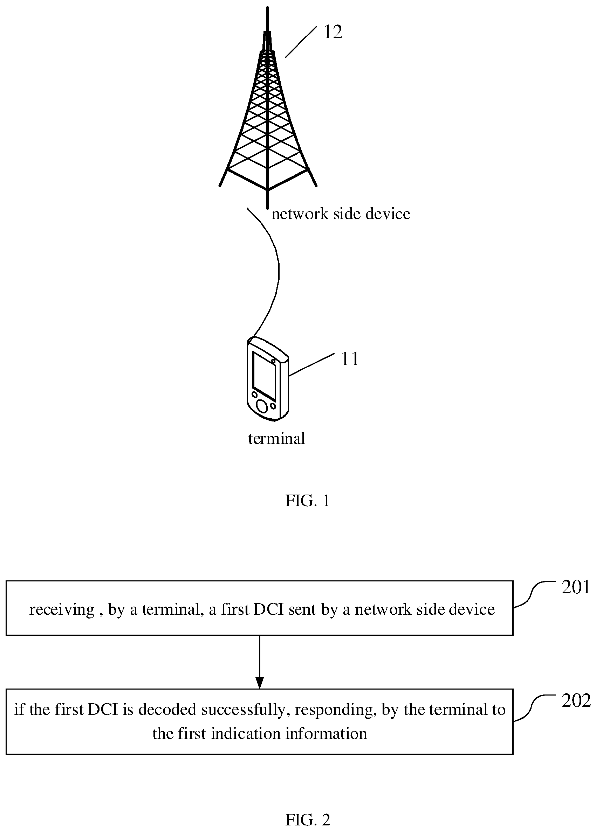

FIG. 1 is a schematic diagram of a network structure applicable to some embodiments of the present disclosure. As shown in FIG. 1, it includes a terminal 11 and a network device 12. The terminal 11 may be a user terminal (User Equipment, UE) or other terminal devices, such as a mobile phone, a Tablet Personal Computer, a Laptop Computer, a personal digital assistant (PDA), a Mobile Internet Device (MID) or a wearable device. It should be noted that in some embodiments of the present disclosure, the specific type of the terminal is not limited. The network device 12 may be a base station, such as a macro station, an LTE eNB, a 5G NR NB, etc.; the network device may also be a small station, such as a low power node (LPN), pico, femto, etc., or the network device can be an access point (AP); the base station can also be a network node composed of a central unit (CU) and a plurality of transmission reception points (TRP) managed and controlled by the CU. It should be noted that in some embodiments of the present disclosure, the specific type of the network device is not limited.

FIG. 2 is a flowchart of a DCI transmission method provided by some embodiments of the present disclosure. As shown in FIG. 2, it includes the following steps.

201. receiving , by a terminal, a first DCI sent by a network device, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; DRX on means active time of DRX.

202. If the first DCI is decoded successfully, responding, by the terminal to the first indication information.

The first indication information may be a bit field in the first DCI, and the above three states are indicated by a bit value in the bit field.

The not performing PDCCH monitoring on subsequent N monitoring opportunities may be performing PDCCH monitoring after skipping N monitoring opportunities. For example: the current monitoring opportunity for the first DCI is monitoring opportunity n, and when N is 3, the monitoring opportunity n+1, the monitoring opportunity n+2, and the monitoring opportunity n+3 are skipped.

The performing the PDCCH monitoring at the next monitoring opportunity may be that the PDCCH monitoring is continued when the next monitoring opportunity after the current monitoring opportunity of the first DCI is detected.

However, stopping the PDCCH monitoring at least in the current DRX on duration may be: stopping the PDCCH monitoring after detecting the first DCI, that is, stopping the PDCCH in at least the current DRX on duration. In addition, stopping the PDCCH monitoring at least within the current DRX on duration can also be referred to as stopping the PDCCH monitoring and entering a sleep state.

The responding to first indication information may include: in the case that the first indication information is used to indicate the terminal not to perform PDCCH monitoring for subsequent N monitoring opportunities, skipping the N monitoring opportunities; or in the case that the first indication information is used to indicate to perform the PDCCH monitoring at the next monitoring opportunity, performing the PDCCH monitoring at the next monitoring opportunity; or in the case that the first indication information is used to indicate to stop the PDCCH monitoring at least within the current DRX on duration, stopping the PDCCH monitoring.

In addition, it should be noted that in some embodiments of the present disclosure, the above-mentioned monitoring opportunity is for the terminal, and for the network device, the above-mentioned monitoring opportunity may be referred to as a transmission opportunity. In some embodiments, the monitoring opportunity and the transmission opportunity are the same opportunity.

In some embodiments of the present disclosure, through the above-mentioned first DCI, the flexibility of PDCCH monitoring of the terminal can be improved, and the power consumption of the terminal can be reduced.

The first indication information includes a monitoring status field (PDCCH monitoring status field).

Wherein, the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

In this embodiment, it can be realized that the monitoring status field includes the three states of the first state, the second state, and the third state. For example, 01 indicates the first state, 10 indicates the second state, and 11 indicates the third state. In this way, the indication of these three states is realized through one bit field, so as to save the overhead of DCI.

In addition, in this embodiment, it may also be implemented that the monitoring status field includes the two states of the first state and the second state.

In an alternative example, the monitoring status field may have a special state, for example, the monitoring status field is a special value (for example: 00), which means invalid or no indication is given. For example: when the first indication information is used to indicate to stop PDCCH monitoring at least within the current DRX on duration, and the monitoring status field only includes two states, the monitoring status field can be set to a special value, for example, 00; or, the monitoring status field is not included in the first DCI.

As an optional implementation, the first indication information includes an indication field included in the first DCI, and the indication field is used to indicate to stop the PDCCH monitoring at least within the current DRX on duration.

It should be noted that the above indication field is used to indicate to stop the PDCCH monitoring at least within the current DRX on duration, which means when the indication field has the specific value, the indication field indicates to stop the PDCCH monitoring at least within the current DRX on duration. In other words, the indication field can be used to indicate whether to stop the PDCCH monitoring at least within the current DRX on duration. For example: in the case that the first indication information includes the monitoring status field, and the monitoring status field indicates the first state or the second state, the indication field does not indicate to stop the PDCCH monitoring at least within the current DRX on duration. That is, the first DCI may include at least one of the monitoring status field and the indication field.

As an optional implementation, when the first indication information is used to indicate to stop the PDCCH monitoring at least within the current DRX on duration, the first DCI and PDSCH are not transmitted in a same TTI, or the indication information is used to indicate to stop the PDCCH monitoring at least within the current DRX on duration, and the first DCI and a non-physical layer signaling used to indicate to stop PDCCH monitoring at least within the current DRX on duration are transmitted in the same TTI, or the first DCI and the non-physical layer signaling are not transmitted in the same TTI.

The TTI may be a certain time domain resource, such as a subframe, a slot, or a mini-slot.

The PDSCH may include a Media Access Control Control Element (MAC CE) or other PDSCH signals.

Since the first DCI and PDSCH are not transmitted in the same TTI, the first DCI can be referred to as a PDCCH trigger signal for triggering the terminal to stop the PDCCH monitoring (PDCCH trigger), so as to trigger the terminal to stop the PDCCH monitoring at least within the current DRX on duration, for example: entering the sleep state.

Moreover, in this embodiment, since the first DCI and PDSCH are not transmitted in the same TTI, when the PDCCH is decoded correctly but the PDSCH is decoded incorrectly, the terminal will no longer perform subsequent PDCCH monitoring, but can receive a retransmission version of the PDSCH to avoid the delay of the packet transmission to the next DRX duration, so as to ensure the delay performance of the terminal. In the same way, the first DCI and the non-physical layer signaling are not transmitted in the same TTI, and the same beneficial effects can also be achieved. The non-physical layer signaling that stops the PDCCH monitoring at least within the current DRX on duration may be a signaling other than a physical signaling, and is used to indicate to stop PDCCH monitoring at least within the current DRX on duration, for example: MAC CE used to indicate the UE to stop an inactive timer within the DRX on duration.

In addition, in the foregoing embodiment, since the first DCI and the non-physical layer signaling can be transmitted in the same TTI, the PDCCH is decoded correctly, but the PDSCH is decoded incorrectly, and the terminal does not perform subsequent PDCCH monitoring to avoid the delay of non-physical layer signaling transmission to the next DRX duration, so as to ensure the delay performance of the terminal. For example, if the first DCI is decoded successfully, the terminal responding to the first indication information includes: if the first DCI is decoded successfully, feeding back, by the terminal, an ACK corresponding to the non-physical layer signaling to the network device, and stopping the PDCCH monitoring at least within the current DRX on duration according to the first DCI.

It should be noted that, in the embodiment, since the first indication information is used to indicate to step the PDCCH monitoring at least within the current DRX on duration, no matter whether the above-mentioned non-physical layer signaling is successfully decoded, ACK corresponding to the non-physical layer signaling is fed back, that is, the HARQ-ACK corresponding to the non-physical layer signaling is set as ACK and fed back to the network device, so that the network device does not send the PDCCH to the terminal at least within the current DRX on duration, and stops sending the non-physical layer signaling. And since only the first DCI is successfully decoded, the ACK corresponding to the non-physical layer signaling is fed back to the network device, which can also save transmission resources.

Optionally, in the foregoing implementation, the responding, by the terminal, to the first indication information includes: if the first DCI is decoded successfully, and an effective time of the first DCI is earlier than an effective time of the non-physical layer signaling, stopping the PDCCH monitoring at least within the current DRX on duration according to the first DCI .

In this implementation, if the effective time of the first DCI is earlier than the effective time of the non-physical layer signaling, the PDCCH monitoring is stopped at least within the current DRX on duration according to the first DCI.

Specifically, the time to stop the PDCCH monitoring is a minimum value of the effective time of the first DCI and the effective time of the non-physical layer signaling. For example: the first DCI indicating the terminal to no longer perform the PDCCH monitoring and the MAC CE used to indicate the terminal to stop the inactive timer in the DRX on duration are transmitted in the same TTI, and the time to stop the PDCCH monitoring is taken as the minimum value of the two effective times.

Optionally, in the foregoing implementation, the method further includes: in the case that the first DCI and the non-physical layer signaling are not transmitted in the same TTI, the first DCI is not successfully decoded, and the non-physical layer signaling is not successfully decoded, if the terminal returns the NACK corresponding to the non-physical layer signaling to the network device, receiving, by the terminal, a second DCI sent by the network device, and the second DCI including second indication information. The second indication information is used to indicate the terminal not to perform the PDCCH monitoring for subsequent M monitoring opportunities, or is used to indicate to perform the PDCCH monitoring at the next monitoring opportunity, or is used to indicate to stop the PDCCH monitoring at least within the current DRX on duration, where M is an integer greater than or equal to 1.

Wherein, the unsuccessful decoding of the first DCI may be a packet loss or a decoding error, and the unsuccessful decoding of the non-physical layer signaling may be a decoding error or a packet loss.

In this embodiment, if the first DCI is not successfully decoded and the non-physical layer signaling is not successfully decoded, if the terminal returns a NACK corresponding to the non-physical layer signaling to the network device, the network device will send the second DCI, so as to avoid the situation where the terminal cannot skip the monitoring opportunity, continue to detect the next monitoring opportunity, or stop the PDCCH monitoring, so as to save the power consumption of the terminal.

It should be noted that the second DCI and the first DCI may be the same or different, and M may be less than or equal to N. In addition, the second DCI sent by the network device may be sent in the same TTI as the non-physical layer signaling, or sent in a different TTI.

As an optional implementation, the method further includes: if the first DCI is not successfully decoded, the terminal receives a third DCI sent by the network device, the third DCI includes third indication information, and the third indication information is used to indicate the terminal not to perform the PDCCH monitoring at subsequent W monitoring opportunities, or used to indicate to perform the PDCCH monitoring at the next monitoring opportunity, or used to indicate to stop the PDCCH monitoring at least within the current DRX on duration, wherein W is an integer greater than or equal to 1.

It should be noted that if the first DCI is not successfully decoded, the terminal may receive the third DCI sent by the network device, which means that the first DCI may not be decoded successfully, and the terminal does not feedback HARQ- ACK (that is, neither ACK nor NACK is fed back), the network device does not detect HARQ-ACK, and thus sends the third DCI. For example: decoding failure (or called decoding error) occurs for the PDCCH, thereby resulting in packet loss. In addition, the HARQ-ACK may correspond to the PDSCH.

The first indication information in the first DCI may indicate any of the three states in step 201. Optionally, the first indication information is to instruct the terminal not to perform the PDCCH monitoring at subsequent N monitoring opportunities, or to indicate to stop the PDCCH monitoring at least within the current DRX on duration.

The third DCI and the first DCI may be the same or different, and W may be less than or equal to N. In addition, the third DCI sent by the network device may be sent in the same TTI as the non-physical layer signaling, or sent in a different TTI.

In this embodiment, since the network device does not detect the HARQ-ACK, the network device sends the third DCI to the terminal, so as to prevent the terminal from being unable to skip the monitoring opportunity, continuing to detect the next monitoring opportunity, or stopping the PDCCH monitoring, so as to save the power consumption of the terminal.

Optionally, in this implementation, the receiving time of the third DCI is before the end position of the N monitoring opportunities indicated by the first DCI; or the receiving time of the third DCI is within the current DRX on duration.

For example: when the first indication information is used to indicate to perform the PDCCH monitoring for N subsequent monitoring opportunities, the terminal receives the third DCI before the end position of the N monitoring opportunities; for another example: when the first indication information is used to indicate to stop the PDCCH monitoring at least within the current DRX on duration, the terminal receives the third DCI within the current DRX on duration.

Optionally, the first DCI is used to indicate the terminal not to perform the PDCCH monitoring for subsequent N monitoring opportunities, or the first DCI is used to indicate to stop the PDCCH monitoring at least within the current DRX on duration, and in the case that the first DCI and PDSCH are transmitted in the same TTI, if the terminal successfully decodes the first DCI but fails to decode the PDSCH, the NACK corresponding to the PDSCH may be fed back to the network device, and the network device detects the NACK corresponding to the PDSCH, and the downlink transmission of the terminal may be stopped, so as to save transmission resources. Wherein, stopping the downlink transmission of the terminal may be stopping PDCCH transmission, or stopping PDCCH and PDSCH transmission.

As an optional implementation, the value of N is configured statically, semi-statically, or dynamically by the network device.

In this implementation, the above-mentioned value of N can be flexibly configured.

Optionally, when the N is statically or semi-statically configured by the network device, the terminal may obtain a specific value corresponding to the N in advance, and the first indication information is also used to indicate the value of N is the specific value.

The specific value may be configured by the network device for the terminal through RRC signaling, MAC CE, or other signaling.

The first indication information may use one bit to indicate that the value of N is the specific value. In this way, one bit may be used to indicate the value of N. For example: 1 bit in the monitoring status field (for example, 1) can indicate the number of monitoring opportunities that the terminal needs to skip. It can be seen that this embodiment can save the overhead of the first DCI.

Optionally, in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

Wherein, the above plurality of candidate values are configured by the network device for the terminal through RRC signaling, MAC CE or other signaling. For example, N is configured with the plurality of candidate values, such as N={2, 5, 10, 15, 20, 25, 40, 80}. In an implementation, the value of N may be directly indicated in the first indication information to achieve dynamic configuration; in another implementation, the target candidate value may also be indicated through the fourth indication information. For example, the network device can dynamically notify the terminal of an index of a specific configuration value of N through MAC CE, that is, an index of the target candidate value, and one bit in the monitoring status field (for example, 1) is used to indicate the terminal that the value is the target candidate value, that is, the value of N is the candidate value indicated by the fourth indication information. In this way, it is possible to instruct the terminal to obtain the number of slots that need skip by using 1 bit in the monitoring status field (for example, 1).

It should be noted that the fourth indication information may be sent before the first DCI, or may be sent at the same time with the first DCI, which is not limited.

It should be noted that in some embodiments of the present disclosure, both M and W can be configured in the same manner as the configuration of N described above.

It should be noted that the DCI transmission method provided by some embodiments of the present disclosure can be applied to NR technology and other communication systems, such as the research version of LTE and WIFI or NR system of the LTE, and can be applied on the authorized frequency band and can also be applied on the unlicensed frequency band, which is not limited herein.

In some embodiments of the present disclosure, a terminal receives the first DCI sent by a network device, the first DCI includes first indication information, and the first indication information is used to indicate the terminal not to perform the PDCCH monitoring on subsequent N monitoring opportunities, or is used to indicate to perform the PDCCH monitoring at the next monitoring opportunity, or is used to indicate to stop the PDCCH monitoring at least within the current DRX on duration, wherein N is an integer greater than or equal to 1. If the first DCI is decoded successfully, then the terminal responds to the first indication information. Therefore, the PDCCH monitoring flexibility of the terminal can be improved through the above-mentioned first DCI, and the power consumption of the terminal can be further reduced.

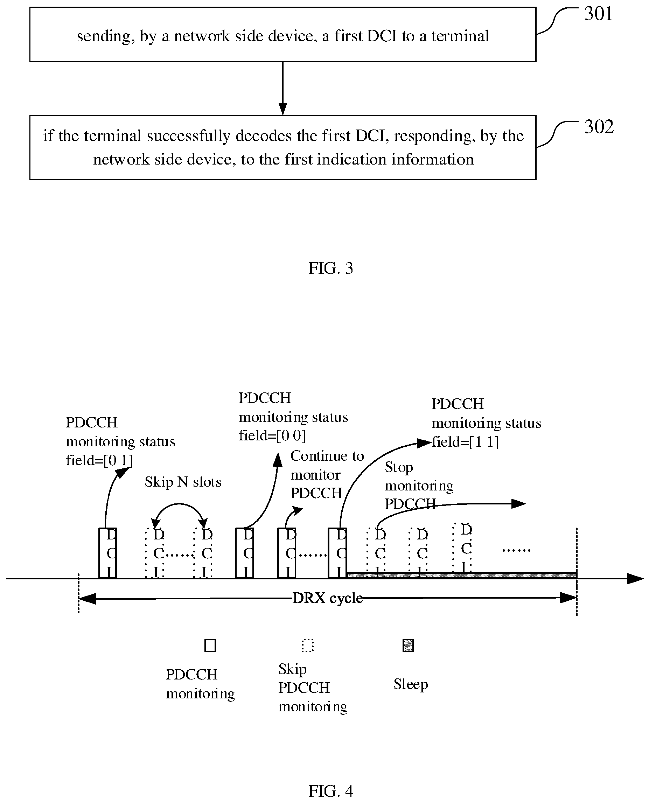

FIG. 3 is a flowchart of a DCI transmission method provided by some embodiments of the present disclosure. As shown in FIG. 3, it includes the following steps:
301. Sending, by a network device, a first DCI to a terminal, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1;
302. If the terminal successfully decodes the first DCI, responding, by the network device, to the first indication information.

The responding to first indication information may include: in the case that the first indication information is used to indicate the terminal not to perform PDCCH monitoring for subsequent N monitoring opportunities, stopping the downlink transmission for the terminal at the N monitoring opportunities, for example: stopping PDCCH transmission. In the case that the first indication information is used to indicate to stop the PDCCH monitoring at least within the current DRX on duration, stopping downlink transmission for the terminal in the current DRX on duration, for example, stopping the PDCCH transmission. In the case that the first indication information is used to indicate to perform the PDCCH monitoring at the next monitoring opportunity, sending the PDCCH of the terminal at the next transmission opportunity.

It should be noted that, in some embodiments of the present disclosure, the monitoring opportunity may be referred to as a transmission opportunity for the network device.

It should be noted that, if the terminal successfully decodes the first DCI, an ACK fed back by the terminal may be received, for example, an ACK corresponding to the PDSCH. Or the NACK corresponding to the PDSCH corresponding to the first DCI may be detected, for example: the first DCI and the PDSCH are transmitted in the same TTI, or the DCI scheduling the PDSCH and the first DCI are transmitted in the same transmission opportunity.

It should be noted that in the case that the terminal is indicated not to perform the PDCCH monitoring for the subsequent N monitoring opportunities or to stop the PDCCH monitoring at least within the current DRX on duration, and before the HARQ-ACK corresponding to the PDSCH scheduled by the DCI at the transmission opportunity (monitoring opportunity for the terminal) of the first DCI, the network device can stop scheduling the downlink transmission of the terminal.

The first indication information includes a monitoring status field.

Wherein, the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

Optionally, the first indication information includes an indication field, and the indication field is used to indicate to stop the PDCCH monitoring at least within the current DRX on duration.

Optionally, when the first indication information is used to indicate to stop the PDCCH monitoring at least within the current DRX on duration, the first DCI and PDSCH are not transmitted in the same transmission time interval TTI; or the indication information is used to indicate to stop the PDCCH monitoring at least within the current DRX on duration, and the first DCI and the non-physical layer signaling used to indicate to stop the PDCCH monitoring at least within the current DRX on duration are transmitted in the same TTI, or the first DCI and the non-physical layer signaling are not transmitted in the same TTI.

Optionally, if the terminal successfully decodes the first DCI, the network device responds to the first indication information, includes: if the terminal successfully decodes the first DCI and an effective time of the first DCI is earlier than an effective time of the non-physical layer signaling, PDCCH transmission is stopped for the terminal at least within the current DRX on duration according to the first DCI.

Optionally, if the terminal successfully decodes the first DCI, the network device responds to the first indication information, includes: if the network device receives the ACK corresponding to the non-physical layer signaling fed back by the terminal, not performing PDCCH transmission for the terminal at least within the current DRX on duration according to the first DCI, and stopping sending the non-physical layer signaling, wherein the ACK indicates that the terminal successfully decodes the first DCI.

Optionally, the method further includes: in the case that the first DCI and the non-physical layer signaling are not transmitted in the same TTI, if the network device receives the NACK corresponding to the non-physical layer signaling returned by the terminal, sending, by the network device, a second DCI to the terminal, wherein the second DCI includes second indication information, and the second indication information is used to indicate the terminal not to perform PDCCH monitoring for subsequent M monitoring opportunities, or is used to indicate to perform the PDCCH monitoring at the next monitoring opportunity, or is used to indicate to stop the PDCCH monitoring at least within the current DRX on duration, the M is an integer greater than or equal to 1, and the NACK indicates that the terminal did not successfully decode the first DCI, and the non-physical layer signaling is not decoded successfully.

Optionally, the method further includes: if the network device does not detect the HARQ-ACK, the network device sends a third DCI to the terminal, wherein the third DCI includes third indication information, and the third indication information is used to indicate the terminal not to perform the PDCCH monitoring for subsequent W monitoring opportunities, or is used to indicate to perform the PDCCH monitoring at the next monitoring opportunity, or is used to indicate to stop the PDCCH monitoring at least within the current DRX on duration, and the W is an integer greater than or equal to 1.

Optionally, the sending time of the third DCI is before the end position of the N monitoring opportunities indicated by the first DCI; or the sending time of the third DCI is within the current DRX on duration.

Optionally, in the case that the first DCI is used to indicate the terminal not to perform the PDCCH monitoring for subsequent N monitoring opportunities, or the first DCI is used to indicate to stop the PDCCH monitoring at least within the current DRX on duration, and the first DCI and PDSCH are transmitted in the same TTI, the method further includes: if the network device detects the NACK corresponding to the PDSCH, stopping, by the network device, downlink transmission of the terminal.

Optionally, the value of N is configured statically, semi-statically or dynamically by the network device.

Optionally, in the case that N is statically or semi-statically configured by the network device, the terminal obtains a specific value corresponding to N in advance, and the first indication information is further used to indicate that the value of N is the specific value; or in the case that N is dynamically configured by the network device, the terminal obtain a plurality of candidate values corresponding to N in advance, and the first indication information is also used to indicate that the value of N is one of the plurality of candidate values.

It should be noted that this embodiment is used as an implementation of the network device corresponding to the embodiment shown in FIG. 2. The related description of the embodiment shown in FIG. 2 may be referred for specific implementation, which will not be repeated in this embodiment to avoid repetitive description, and the same beneficial effect can be achieved.

Several embodiments below are used to illustrate the methods provided by some embodiments of the present disclosure. It should be noted that the transmission opportunities and monitoring opportunities can be understood as the same opportunity.

### Embodiment 1:

The DCI carries a PDCCH monitoring status field, which is the PDCCH monitoring status field. The field is composed of multiple consecutive bits. The field has three states corresponding to the following three function indications: the terminal does not perform PDCCH monitoring for the N subsequent transmission opportunities, wherein N is statically, semi-statically or dynamically configured by the network device; the terminal continues to perform the PDCCH monitoring at the next transmission opportunity; and the terminal stops the PDCCH monitoring and enters the sleep state.

A specific embodiment is shown in FIG. 4. The PDCCH monitoring status field is indicated by two bits. When the field value is [0 1], the terminal will skip the PDCCH monitoring opportunities of N slots, and the value of N is indicated semi-statically or dynamically by the network device for the terminal through RRC signaling or MAC CE, In a better and simplest way, the network device can semi-statically configure the specific value of N for the network device through RRC signaling, a bit in the PDCCH monitoring status field is 1, which can realize the indication of the number of transmission opportunities that the terminal needs to skip. This method is the simplest but requires the value of N to be fixed within a certain period of time, and the flexibility is not high. Another method is that the network device configures a plurality of candidate values for N through pre-agreement, namely a static mode, or RRC signaling configuration, namely a semi-static mode, such as N={2, 5, 10, 15, 20, 25, 40, 80}, the network device can dynamically notify the terminal of the index of the specific configuration value of N through MAC CE, only one bit 1 in the PDCCH monitoring status field is needed to enable the terminal to obtain the number of slots that need skip. Wherein, the information of N may be indicated in advance before the terminal adopts it, otherwise, a default value of N may be predefined.

As shown in FIG. 4, after the terminal skips the PDCCH monitoring of N transmission opportunities, when the terminal detects the PDCCH at the new PDCCH transmission time and detects the signaling [0 0] from the PDCCH monitoring status field of the DCI, the terminal will continue to detect the PDCCH at the next transmission opportunity. When the terminal detects signaling [1 1] in the monitoring status field of the PDCCH, the terminal will no longer detect the PDCCH on a subsequent slot or PDCCH monitoring opportunity in the DRX On duration. It should be pointed out that the number of bits contained in the PDCCH monitoring status field and the representation method thereof are just for illustration. For example, a candidates set of N can be configured using RRC signaling, but MAC CE is not used to notify the terminal of the specific candidates index, and then the candidates index is carried by the PDCCH monitoring status field of the DCI. At this time, the number of indication bits will increase significantly.

As described above, after the current DCI is used to indicate the terminal to skip the PDCCH monitoring opportunities of N slots, if the DCI is decoded inaccurately, the terminal cannot stop the PDCCH monitoring, and the network device can stop scheduling the downlink transmission of the terminal before receiving the HARQ-ACK corresponding to the PDSCH scheduled by the DCI that indicated the terminal to skip the PDCCH monitoring opportunities of N slots.

If the network device cannot detect the HARQ-ACK, the network device can resume scheduling downlink transmission at the next PDCCH transmission opportunity. If the HARQ-ACK is an ACK, the network device will not perform the downlink data scheduling for N PDCCH transmission opportunities.

### Embodiment 2:

The DCI carries a PDCCH monitoring status field, which is the PDCCH monitoring status field. The field is composed of several or multiple consecutive bits. The field has two states corresponding to the following two function indications: the terminal does not perform PDCCH monitoring for the N subsequent transmission opportunities, wherein N is statically, semi-statically or dynamically configured by the network device; the terminal continues to perform the PDCCH monitoring at the next transmission opportunity.

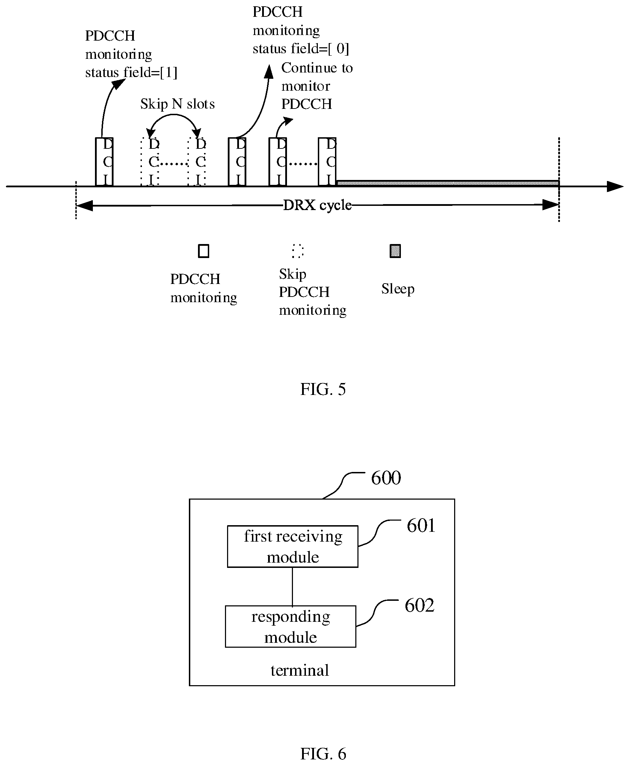

A specific embodiment is shown in FIG. 5. The PDCCH monitoring status field is indicated by 1 bit. When the field value is [1], the terminal will skip the PDCCH monitoring opportunities of N slots, and the value of N is indicated semi-statically or dynamically by the network device for the terminal through RRC signaling or MAC CE, In a better and simplest way, the network device can semi-statically configure the specific value of N for the network device through RRC signaling, a bit in the PDCCH monitoring status field is 1, which can realize the indication of the number of transmission opportunities that the terminal needs to skip. This method is the simplest but requires the value of N to be fixed within a certain period of time, and the flexibility is not high. Another method is that the network device configures a plurality of candidate values for N through pre-agreement, namely a static mode, or RRC signaling configuration, namely a semi-static mode, such as N={2, 5, 10, 15, 20, 25, 40, 80}, the network device can dynamically notify the terminal of the index of the specific configuration value of N through MAC CE, only one bit 1 in the PDCCH monitoring status field is needed to enable the terminal to obtain the number of slots that need skip.

As shown in FIG. 5, after the terminal skips the PDCCH monitoring of N transmission opportunities, when the terminal detects the PDCCH at the new PDCCH transmission time and detects the signaling [0] from the PDCCH monitoring status field of the DCI, the terminal will continue to detect the PDCCH at the next transmission opportunity. It should be pointed out that the number of bits contained in the PDCCH monitoring status field and the representation method thereof are just for illustration. For example, a candidates set of N can be configured using RRC signaling, but MAC CE is not used to notify the terminal of the specific candidates index, and then the candidates index is carried by the PDCCH monitoring status field of the DCI. At this time, the number of indication bits will increase significantly.

### Example 3:

If the DCI is used to indicate the terminal to no longer perform PDCCH monitoring and enter the sleep state (that is, the above stopping the PDCCH monitoring at least within the current DRX on duration), the scenario is generally that the data transmission is completed and the terminal needs to enter the sleep state to save power. However, the PDCCH+PDSCH structure is used in one TTI of NR and LTE (such as a subframe, a slot or a mini slot). If the PDCCH is decoded incorrectly, the terminal will continue to monitor the PDCCH because it does not receive an indication to no longer perform the PDCCH monitoring, there is no impact on the system performance. However, if the PDCCH is decoded correctly and the PDSCH is decoded incorrectly, the terminal will no longer perform subsequent PDCCH monitoring and cannot receive the retransmitted version of the PDSCH decoded incorrectly, which will cause the packet to be delayed until the next DRX duration. This will not be acceptable for scenarios that require high latency. In order to ensure that the delay performance is not deteriorated, there are the following two solutions.

Solution 1: The DCI that indicates the terminal to no longer perform PDCCH monitoring is not transmitted in the same TTI as the PDSCH, that is, a PDCCH trigger signal (PDCCH trigger) is sent to trigger the terminal to enter the sleep state.

Solution 2: The DCI that indicates the terminal to no longer perform PDCCH monitoring and the MAC CE used to indicate the terminal to stop the inactive timer in the DRX on duration (for example: the above non-physical layer signaling) are transmitted in the same TTI (for example, a subframe in LTE and a slot in NR).

The time for the terminal to stop the PDCCH monitoring takes the minimum value indicated by the two signalings of DCI and MAC CE. The principle is as follows.

After the terminal detects the indication of "no longer perform the PDCCH monitoring subsequently" carried by the DCI, it will not monitor the PDCCH subsequently, no matter whether the MAC CE is decoded correctly, and the corresponding HARQ-ACK is set as ACK and fed back to the network device. The terminal does not stop monitoring the PDCCH; the network device receives the HARQ-ACK corresponding to the MAC CE at a corresponding location. If HARQ-ACK is detected as ACK, the network device stops resending the MAC CE; if HARQ-ACK is not detected (that is, PDCCH decoding fails, resulting in packet loss), the network device can resume downlink transmission in the remaining DRX duration. For example, the PDCCH+MAC CE described in the second solution is continuously transmitted. If a NACK is received (for example: the MAC CE and NACK are not sent at the same TTI at this time, as in the case of sending the PDCCH trigger in the first solution, the MAC CE can be sent before the PDCCH trigger), the network device re-sends the PDCCH trigger and MAC CE or the PDCCH+MAC CE described in the second solution.

The solution 1 is simple, but if the PDCCH is decoded incorrectly, the terminal cannot enter the sleep state. The solution 2 requires the cooperation of MAC CE to achieve a better trade off.

It should be noted that the DCI indicating the terminal to no longer perform the PDCCH monitoring to enter the sleep state may be included in the PDCCH monitoring status field as described in the first embodiment, or may exist as an single indication field, no matter whether the indication for skipping N PDCCHs exist or not. Of course, if the indication field and the monitoring status field are used for separate fields for indication, the priority of the two fields can be set. For example, the priority of the indication field is higher than that of the monitoring status field, or the priority of the monitoring status field is higher than that of the indication field.

FIG. 6 is a structural diagram of a terminal provided by some embodiments of the present disclosure. As shown in FIG. 6, the terminal 600 includes: a first receiving module 601, configured to receive a first DCI sent by a network device, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; a responding module 602, configured to, if the first DCI is decoded successfully, respond, by the terminal, to the first indication information.

The first indication information includes a monitoring status field. Wherein, the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

Optionally, the first indication information includes an indication field included in the first DCI, and the indication field is used to indicate to stop the PDCCH monitoring at least within the current DRX on duration.

Optionally, when the first indication information is used to indicate to stop the PDCCH monitoring at least within the current DRX on duration, the first DCI and PDSCH are not transmitted in a same TTI, or the indication information is used to indicate to stop the PDCCH monitoring at least within the current DRX on duration, and the first DCI and a non-physical layer signaling used to indicate to stop PDCCH monitoring at least within the current DRX on duration are transmitted in the same TTI, or the first DCI and the non-physical layer signaling are not transmitted in the same TTI.

Optionally, the responding module 602 is configured to, if the first DCI is decoded successfully, and an effective time of the first DCI is earlier than an effective time of the non-physical layer signaling, stop the PDCCH monitoring at least within the current DRX on duration according to the first DCI.

Optionally, the responding module 602 is configured to, if the first DCI decodes successfully, feedback, by the terminal, the ACK corresponding to the non-physical layer signaling to the network device, and stop the PDCCH monitoring at least within the current DRX on duration according to the first DCI.

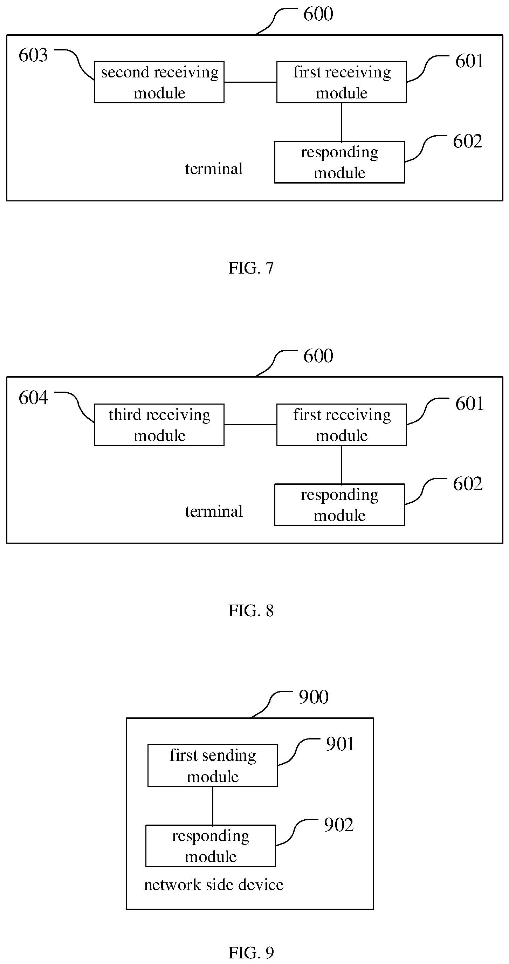

Optionally, as shown in FIG. 7, the terminal 600 further includes: a second receiving module 603, configured to, in the case that the first DCI and the non-physical layer signaling are not transmitted in the same TTI, the first DCI is not successfully decoded, and the non-physical layer signaling is not successfully decoded, if the terminal returns the NACK corresponding to the non-physical layer signaling to the network device, receive, by the terminal, a second DCI sent by the network device, wherein the second DCI includes second indication information, the second indication information is used to indicate the terminal not to perform the PDCCH monitoring for subsequent M monitoring opportunities, or is used to indicate to perform the PDCCH monitoring at the next monitoring opportunity, or is used to indicate to stop the PDCCH monitoring at least within the current DRX on duration, where M is an integer greater than or equal to 1.

Optionally, as shown in FIG. 8, the terminal 600 further includes: a third receiving module 604, configured to, if the first DCI is not successfully decoded, receive, by the terminal, a third DCI sent by the network device, wherein the third DCI includes third indication information, and the third indication information is used to indicate the terminal not to perform the PDCCH monitoring at subsequent W monitoring opportunities, or used to indicate to perform the PDCCH monitoring at the next monitoring opportunity, or used to indicate to stop the PDCCH monitoring at least within the current DRX on duration, wherein W is an integer greater than or equal to 1.

Optionally, the receiving time of the third DCI is before the end position of the N monitoring opportunities indicated by the first DCI; or the receiving time of the third DCI is within the current DRX on duration.

Optionally, the value of N is configured statically, semi-statically or dynamically by the network device.

Optionally, when the N is statically or semi-statically configured by the network device, the terminal may obtain a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

It should be noted that the above-mentioned terminal 600 in this embodiment may be a terminal of any implementation in the method embodiments of the present disclosure, and any implementation of the terminal in the method embodiments of the present disclosure may be the terminal 600 in this embodiment, the same beneficial effect is achieved, which will not be repeated here.

FIG. 9 is a structural diagram of a network device provided by some embodiments of the present disclosure. As shown in FIG. 9, the network device 900 includes: a first sending module 901, configured to send a first DCI to a terminal, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; a responding module 902, configured to, if the terminal successfully decodes the first DCI, responding, by the network device, to the first indication information.

The first indication information includes a monitoring status field, wherein the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

Optionally, the first indication information includes an indication field, and the indication field is used to indicate to stop the PDCCH monitoring at least within the current DRX on duration.

Optionally, when the first indication information is used to indicate to stop the PDCCH monitoring at least within the current DRX on duration, the first DCI and PDSCH are not transmitted in the same transmission time interval TTI; or the indication information is used to indicate to stop the PDCCH monitoring at least within the current DRX on duration, and the first DCI and the non-physical layer signaling used to indicate to stop the PDCCH monitoring at least within the current DRX on duration are transmitted in the same TTI, or the first DCI and the non-physical layer signaling are not transmitted in the same TTI.

Optionally, the responding module 902 is configured to: if the terminal successfully decodes the first DCI and an effective time of the first DCI is earlier than an effective time of the non-physical layer signaling, stop PDCCH transmission for the terminal at least within the current DRX on duration according to the first DCI.

Optionally, the responding module 902 is configured to, if the network device receives the ACK corresponding to the non-physical layer signaling fed back by the terminal, not perform PDCCH transmission for the terminal at least within the current DRX on duration according to the first DCI, and stop sending the non-physical layer signaling, wherein the ACK indicates that the terminal successfully decodes the first DCI.

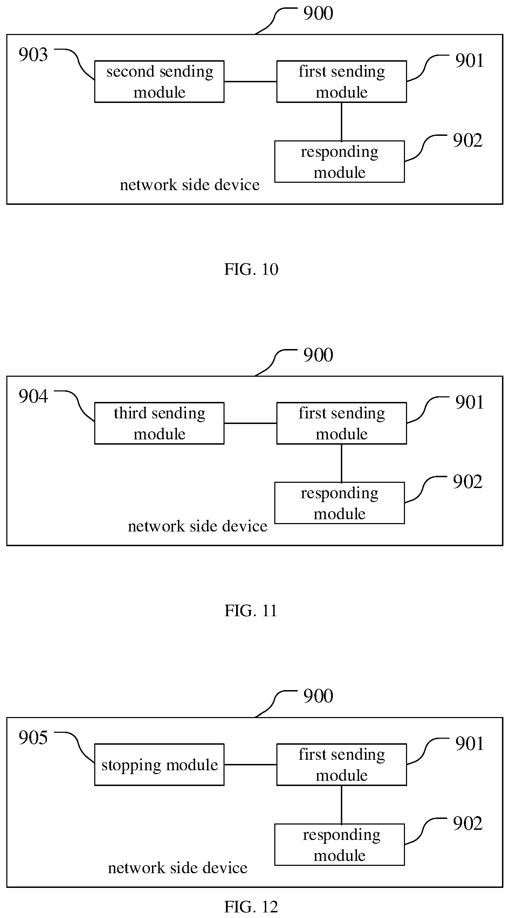

Optionally, as shown in FIG. 10, the network device 900 further includes: a second sending module 903, configured to, in the case that the first DCI and the non-physical layer signaling are not transmitted in the same TTI, if the network device receives the NACK corresponding to the non-physical layer signaling returned by the terminal, send a second DCI to the terminal, wherein the second DCI includes second indication information, and the second indication information is used to indicate the terminal not to perform PDCCH monitoring for subsequent M monitoring opportunities, or is used to indicate to perform the PDCCH monitoring at the next monitoring opportunity, or is used to indicate to stop the PDCCH monitoring at least within the current DRX on duration, the M is an integer greater than or equal to 1, and the NACK indicates that the terminal did not successfully decode the first DCI, and the non-physical layer signaling is not decoded successfully.

Optionally, as shown in FIG. 11, the network device 900 further includes: a third sending module 904, configured to, if the network device does not detect the HARQ-ACK, send a third DCI to the terminal, wherein the third DCI includes third indication information, and the third indication information is used to indicate the terminal not to perform the PDCCH monitoring for subsequent W monitoring opportunities, or is used to indicate to perform the PDCCH monitoring at the next monitoring opportunity, or is used to indicate to stop the PDCCH monitoring at least within the current DRX on duration, and the W is an integer greater than or equal to 1.

Optionally, the sending time of the third DCI is before the end position of the N monitoring opportunities indicated by the first DCI; or the sending time of the third DCI is within the current DRX on duration.

Optionally, in the case that the first DCI is used to indicate the terminal not to perform the PDCCH monitoring for subsequent N monitoring opportunities, or the first DCI is used to indicate to stop the PDCCH monitoring at least within the current DRX on duration, and the first DCI and PDSCH are transmitted in the same TTI, as shown in FIG. 12, the network device further includes: a stopping module 905, configured to, if the network device detects the NACK corresponding to the PDSCH, stop, by the network device, downlink transmission of the terminal

Optionally, the value of N is configured statically, semi-statically or dynamically by the network device.

Optionally, when the N is statically or semi-statically configured by the network device, the terminal may obtain a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

It should be noted that the above-mentioned network device 900 in this embodiment may be a network device of any implementation in the method embodiments of the present disclosure, and any implementation of the network device in the method embodiments of the present disclosure may be the network device 900 in this embodiment, the same beneficial effect is achieved, which will not be repeated here.

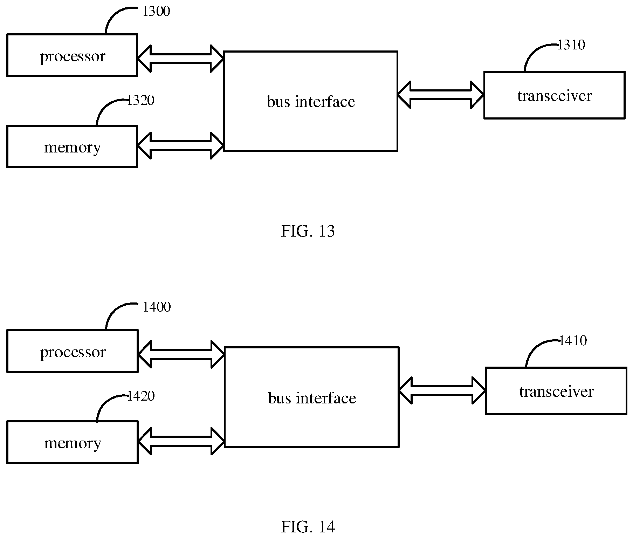

FIG. 13 is a structural diagram of another terminal provided by some embodiments of the present disclosure. As shown in FIG. 13, the terminal includes: a transceiver 1310, a memory 1320, a processor 1300, and a program stored in the memory and executed by the processor 1300.

The transceiver 1310 is configured to receive a first DCI sent by a network device, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; and if the first DCI is decoded successfully, respond to the first indication information; or, the transceiver 1310 is configured to receive a first DCI sent by a network device, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; and the processor 1033 is configured to, if the first DCI is decoded successfully, respond to the first indication information.

The transceiver 1310 may be used to receive and send data under the control of the processor 1300. In FIG. 13, the bus architecture may include any number of interconnected buses and bridges. Specifically, various circuits of one or more processors represented by the processor 1300 and the memory represented by the memory 1320 are linked together. The bus architecture can also link various other circuits such as peripheral devices, voltage regulators, power management circuits, etc., which are all known in the art, and therefore, no further description will be given herein. The bus interface provides the interface. The transceiver 1310 may be a plurality of elements, including a transmitter and a receiver, and provide a unit for communicating with various other devices on the transmission medium.

The processor 1300 is responsible for managing the bus architecture and general processing, and the memory 1320 can store data used by the processor 1300 when performing operations.

It should be noted that the memory 1320 is not limited to being only on the terminal, and the memory 1320 and the processor 1300 may be separated in different geographic locations.

The first indication information includes a monitoring status field;

Wherein, the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

Optionally, the first indication information includes an indication field, and the indication field is used to indicate to stop the PDCCH monitoring at least within the current DRX on duration.

Optionally, when the first indication information is used to indicate to stop the PDCCH monitoring at least within the current DRX on duration, the first DCI and PDSCH are not transmitted in a same TTI, or the indication information is used to indicate to stop the PDCCH monitoring at least within the current DRX on duration, and the first DCI and a non-physical layer signaling used to indicate to stop PDCCH monitoring at least within the current DRX on duration are transmitted in the same TTI, or the first DCI and the non-physical layer signaling are not transmitted in the same TTI.

Optionally, if the first DCI is decoded successfully, responding, by the terminal, to the first indication information comprises: if the first DCI is decoded successfully, and an effective time of the first DCI is earlier than an effective time of the non-physical layer signaling, stopping the PDCCH monitoring at least within the current DRX on duration according to the first DCI.

Optionally, if the first DCI is decoded successfully, responding, by the terminal, to the first indication information comprises: if the first DCI decodes successfully, feeding back, by the terminal, the ACK corresponding to the non-physical layer signaling to the network device, and stopping the PDCCH monitoring at least within the current DRX on duration according to the first DCI.

Optionally, the transceiver 1310 is further configured to, in the case that the first DCI and the non-physical layer signaling are not transmitted in the same TTI, the first DCI is not successfully decoded, and the non-physical layer signaling is not successfully decoded, if the terminal returns the NACK corresponding to the non-physical layer signaling to the network device, receive, by the terminal, a second DCI sent by the network device, wherein the second DCI includes second indication information, the second indication information is used to indicate the terminal not to perform the PDCCH monitoring for subsequent M monitoring opportunities, or is used to indicate to perform the PDCCH monitoring at the next monitoring opportunity, or is used to indicate to stop the PDCCH monitoring at least within the current DRX on duration, where M is an integer greater than or equal to 1.

Optionally, the transceiver 1310 is further configured to, if the first DCI is not successfully decoded, receive, by the terminal, a third DCI sent by the network device, wherein the third DCI includes third indication information, and the third indication information is used to indicate the terminal not to perform the PDCCH monitoring at subsequent W monitoring opportunities, or used to indicate to perform the PDCCH monitoring at the next monitoring opportunity, or used to indicate to stop the PDCCH monitoring at least within the current DRX on duration, wherein W is an integer greater than or equal to 1.

Optionally, the receiving time of the third DCI is before the end position of the N monitoring opportunities indicated by the first DCI; or the receiving time of the third DCI is within the current DRX on duration.

Optionally, the value of N is configured statically, semi-statically or dynamically by the network device.

Optionally, when the N is statically or semi-statically configured by the network device, the terminal may obtain a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

It should be noted that the above-mentioned terminal in this embodiment may be a terminal of any implementation in the method embodiments of the present disclosure, and any implementation of the terminal in the method embodiments of the present disclosure may be the terminal in this embodiment, the same beneficial effect is achieved, which will not be repeated here.

FIG. 14 is a structural diagram of another network device provided by some embodiments of the present disclosure. As shown in FIG. 14, the network device includes: a transceiver 1410, a memory 1420, a processor 1400, and a program stored in the memory 1420 and executed by the processor.

The transceiver 1410 is configured to send a first DCI to a terminal, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; if the terminal successfully decodes the first DCI, the network device responds to the first indication information; or

The transceiver 1410 is configured to send a first DCI to a terminal, wherein the first DCI includes first indication information, and the first indication information is used to indicate the terminal not to perform PDCCH monitoring for subsequent N monitoring opportunities, or it is used to indicate the terminal to perform PDCCH monitoring at the next monitoring opportunity, or it is used to indicate the terminal to stop PDCCH monitoring at least within a current DRX on duration, wherein N is an integer greater than or equal to 1; and the processor 1400 is configured to, if the terminal successfully decodes the first DCI, respond to the first indication information.

The transceiver 1410 can be used to receive and send data under the control of the processor 1400. In FIG. 14, the bus architecture may include any number of interconnected buses and bridges. Specifically, various circuits of one or more processors represented by the processor 1400 and the memory represented by the memory 1420 are linked together. The bus architecture can also link various other circuits such as peripheral devices, voltage regulators, power management circuits, etc., which are all known in the art, and therefore, no further description will be given herein. The bus interface provides the interface. The transceiver 1410 may be a plurality of elements, including a transmitter and a receiver, and provide a unit for communicating with various other devices on the transmission medium.

The processor 1400 is responsible for managing the bus architecture and general processing, and the memory 1420 can store data used by the processor 1400 when performing operations.

It should be noted that the memory 1420 is not limited to being only on the network device, and the memory 1420 and the processor 1400 may be separated in different geographic locations.

The first indication information includes a monitoring status field; wherein the monitoring status field is used to indicate one of three states, the three states include: a first state where PDCCH monitoring is not performed for the subsequent N monitoring opportunities, and a second state where PDCCH monitoring is performed at the next monitoring opportunity and a third state where PDCCH monitoring is stopped at least within the current DRX on duration; or the monitoring status field is used to indicate one state in two states, and the two states include: a first state where PDCCH monitoring is not performed for subsequent N monitoring opportunities and a second state where PDCCH monitoring is performed at the next monitoring opportunity.

Optionally, the first indication information includes an indication field, and the indication field is used to indicate to stop the PDCCH monitoring at least within the current DRX on duration.

Optionally, when the first indication information is used to indicate to stop the PDCCH monitoring at least within the current DRX on duration, the first DCI and PDSCH are not transmitted in the same transmission time interval TTI; or the indication information is used to indicate to stop the PDCCH monitoring at least within the current DRX on duration, and the first DCI and the non-physical layer signaling used to indicate to stop the PDCCH monitoring at least within the current DRX on duration are transmitted in the same TTI, or the first DCI and the non-physical layer signaling are not transmitted in the same TTI.

Optionally, if the terminal successfully decodes the first DCI, responding, by the network device, to the first indication information includes: if the terminal successfully decodes the first DCI and an effective time of the first DCI is earlier than an effective time of the non-physical layer signaling, stopping PDCCH transmission for the terminal at least within the current DRX on duration according to the first DCI.

Optionally, if the terminal successfully decodes the first DCI, responding, by the network device, to the first indication information includes: if the network device receives the ACK corresponding to the non-physical layer signaling fed back by the terminal, not performing PDCCH transmission for the terminal at least within the current DRX on duration according to the first DCI, and stopping sending the non-physical layer signaling, wherein the ACK indicates that the terminal successfully decodes the first DCI.

Optionally, the transceiver 1410 is further configured to, in the case that the first DCI and the non-physical layer signaling are not transmitted in the same TTI, if the network device receives the NACK corresponding to the non-physical layer signaling returned by the terminal, send a second DCI to the terminal, wherein the second DCI includes second indication information, and the second indication information is used to indicate the terminal not to perform PDCCH monitoring for subsequent M monitoring opportunities, or is used to indicate to perform the PDCCH monitoring at the next monitoring opportunity, or is used to indicate to stop the PDCCH monitoring at least within the current DRX on duration, the M is an integer greater than or equal to 1, and the NACK indicates that the terminal did not successfully decode the first DCI, and the non-physical layer signaling is not decoded successfully.

Optionally, the transceiver 1410 is further configured to, if the network device does not detect the HARQ-ACK, send a third DCI to the terminal, wherein the third DCI includes third indication information, and the third indication information is used to indicate the terminal not to perform the PDCCH monitoring for subsequent W monitoring opportunities, or is used to indicate to perform the PDCCH monitoring at the next monitoring opportunity, or is used to indicate to stop the PDCCH monitoring at least within the current DRX on duration, and the W is an integer greater than or equal to 1.

Optionally, the sending time of the third DCI is before the end position of the N monitoring opportunities indicated by the first DCI; or the sending time of the third DCI is within the current DRX on duration.

Optionally, in the case that the first DCI is used to indicate the terminal not to perform the PDCCH monitoring for subsequent N monitoring opportunities, or the first DCI is used to indicate to stop the PDCCH monitoring at least within the current DRX on duration, and the first DCI and PDSCH are transmitted in the same TTI, the transceiver 1410 is further configured to, if the network device detects the NACK corresponding to the PDSCH, stop, by the network device, downlink transmission of the terminal.

Optionally, the value of N is configured statically, semi-statically or dynamically by the network device.

Optionally, when the N is statically or semi-statically configured by the network device, the terminal may obtain a specific value corresponding to the N in advance, and the first indication information is also used to indicate the value of N is the specific value; or in a case that the N is dynamically configured by the network device, the terminal obtains a plurality of candidate values corresponding to the N in advance, and the first indication information is also used to indicate the value of N is one of the plurality of candidate values; or in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

It should be noted that the above-mentioned network device in this embodiment may be a network device of any implementation in the method embodiments of the present disclosure, and any implementation of the network device in the method embodiments of the present disclosure may be the network device in this embodiment, the same beneficial effect is achieved, which will not be repeated here.

Some embodiments of the present disclosure further provide a computer-readable storage medium on which a computer program is stored, where the program is executed by a processor to implement the steps of the DCI transmission method in the terminal side provided by some embodiments of the present disclosure, or the steps in the DCI transmission method at the network device provided by some embodiments of the present disclosure.

In the several embodiments provided in this disclosure, it should be understood that the method and device can be implemented in other ways. For example, the device embodiments described above are only illustrative. For example, the division of the units is only a logical function division, and there may be other divisions in actual implementation, for example, multiple units or components may be combined or can be integrated into another system, or some elements can be ignored or not implemented. In addition, the displayed or discussed mutual coupling or direct coupling or communication connection may be indirect coupling or communication connection through some interfaces, devices or units, and may be in electrical, mechanical or other forms.

In addition, the functional units in the various embodiments of the present disclosure may be integrated into one processing unit, or each unit may be separately physically included, or two or more units may be integrated into one unit. The integrated unit may be implemented in the form of hardware, or in the form of hardware plus software functional units.

The integrated unit implemented in the form of a software functional unit may be stored in a computer readable storage medium. The software functional unit is stored in a storage medium, and includes several instructions to enable a computer device (which may be a personal computer, a server, or a network device, etc.) to execute some steps of the methods in the various embodiments of the present disclosure. The storage media include: U disk, mobile hard disk, read-only memory (ROM), random access memory (RAM), magnetic disks or optical disks, etc., which can store program codes.

It can be understood that the embodiments described in the present disclosure can be implemented by hardware, software, firmware, middleware, microcode, or a combination thereof. For hardware implementation, the processing unit can be implemented in one or more application specific integrated circuits (ASIC), digital signal processor (DSP), digital signal processing device (DSP Device, DSPD), programmable Logic Device (PLD), Field-Programmable Gate Array (FPGA), general-purpose processors, controllers, microcontrollers, microprocessors, and other electronic units for performing the functions described in this disclosure or the combination thereof.

For software implementation, the technology described in the embodiments of the present disclosure can be implemented through modules (for example, procedures, functions, etc.) that perform the functions described in the embodiments of the present disclosure. The software codes can be stored in the memory and executed by the processor. The memory can be implemented within the processor or external to the processor.

## Claims

1. A downlink control information, DCI, transmission method, comprising:
receiving (201), by a terminal, a first DCI sent by a network device, wherein the first DCI includes first indication information, and the first indication information indicates the terminal not to perform physical downlink control channel, PDCCH, monitoring for subsequent N monitoring opportunities, or indicates the terminal to perform the PDCCH monitoring at a next monitoring opportunity, or indicates the terminal to stop the PDCCH monitoring at least within a current Discontinuous Reception, DRX, on duration, wherein N is an integer greater than or equal to 1; and
if the first DCI is decoded successfully, performing responding (202), by the terminal, according to the first indication information,
wherein the first indication information includes a monitoring status field, and the monitoring status field is indicated by one bit or two bits;
the monitoring status field corresponds to three states and indicates one of the three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or
the monitoring status field corresponds to two states and indicates one of the two states, and the two states include: a first state where the PDCCH monitoring is not performed for the subsequent N monitoring opportunities and a second state where the PDCCH monitoring is performed at the next monitoring opportunity.

2. The method of claim 1, wherein the first indication information includes an indication field, and the indication field indicates to stop the PDCCH monitoring at least within the current DRX on duration.

3. The method according to claim 1 or 2, wherein in the case that the first indication information indicates to stop the PDCCH monitoring at least within the current DRX on duration, the first DCI and a physical downlink shared channel, PDSCH, are not transmitted in a same transmission time interval, TTI, or
the indication information indicates to stop the PDCCH monitoring at least within the current DRX on duration, and the first DCI and a non-physical layer signaling used to indicate to stop the PDCCH monitoring at least within the current DRX on duration are transmitted in the same TTI, or the first DCI and the non-physical layer signaling are not transmitted in the same TTI.

4. The method of claim 3, wherein, if the first DCI is decoded successfully, the performing responding (202), by the terminal, according to the first indication information comprises:
if the first DCI is decoded successfully, and an effective time of the first DCI is earlier than an effective time of the non-physical layer signaling, stopping the PDCCH monitoring at least within the current DRX on duration according to the first DCI; or
if the first DCI is decoded successfully, feeding back, by the terminal, an ACK corresponding to the non-physical layer signaling to the network device, and stopping the PDCCH monitoring at least within the current DRX on duration according to the first DCI.

5. The method of claim 3, further comprising:
in the case that the first DCI and the non-physical layer signaling are not transmitted in the same TTI, the first DCI is not successfully decoded, and the non-physical layer signaling is not successfully decoded, if the terminal returns an NACK corresponding to the non-physical layer signaling to the network device, receiving, by the terminal, a second DCI sent by the network device, wherein the second DCI includes second indication information, the second indication information is used to indicate the terminal not to perform the PDCCH monitoring for subsequent M monitoring opportunities, or is used to indicate to perform the PDCCH monitoring at the next monitoring opportunity, or is used to indicate to stop the PDCCH monitoring at least within the current DRX on duration, wherein M is an integer greater than or equal to 1.

6. The method according to claim 1 or 2, further comprising:
if the first DCI is not successfully decoded, receiving, by the terminal, a third DCI sent by the network device, wherein the third DCI includes third indication information, and the third indication information is used to indicate the terminal not to perform the PDCCH monitoring for subsequent W monitoring opportunities, or used to indicate to perform the PDCCH monitoring at the next monitoring opportunity, or used to indicate to stop the PDCCH monitoring at least within the current DRX on duration, wherein W is an integer greater than or equal to 1.

7. The method of claim 6, wherein a receiving time of the third DCI is before an end position of the N monitoring opportunities indicated by the first DCI; or
the receiving time of the third DCI is within the current DRX on duration.

8. The method according to claim 1 or 2, wherein the value of N is configured statically, semi-statically or dynamically by the network device.

9. The method of claim 8, wherein in the case that the N is statically or semi-statically configured by the network device, the terminal obtains a specific value corresponding to the N in advance, and the first indication information is also used to indicate the value of N is the specific value; or
in a case that the N is dynamically configured by the network device, the terminal obtains a plurality of candidate values corresponding to the N in advance, and the first indication information is also used to indicate the value of N is one of the plurality of candidate values; or
in the case that N is dynamically configured by the network device, the terminal obtain the plurality of candidate values corresponding to N in advance, the terminal receives fourth indication information sent by the network device, the fourth indication information is used to indicate a target candidate value among the plurality of candidate values, and the first indication information is also used to indicate that the value of N is the target candidate value.

10. A DCI transmission method, comprising:
sending (301), by a network device, a first DCI to a terminal, wherein the first DCI includes first indication information, and the first indication information indicates the terminal not to perform PDCCH monitoring for subsequent N monitoring opportunities, or indicates the terminal to perform the PDCCH monitoring at a next monitoring opportunity, or indicates the terminal to stop the PDCCH monitoring at least within a current DRX on duration, wherein N is an integer greater than or equal to 1;
if the network device receives an ACK or an NACK fed back by the terminal, performing responding (302), by the network device, according to the first indication information,
wherein the first indication information includes a monitoring status field, and the monitoring status field is indicated by one bit or two bits;
the monitoring status field corresponds to three states and indicates one of the three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or
the monitoring status field corresponds to two states and indicates one of the two states, and the two states include: a first state where the PDCCH monitoring is not performed for the subsequent N monitoring opportunities and a second state where the PDCCH monitoring is performed at the next monitoring opportunity.

11. The method of claim 10, wherein the first indication information includes an indication field, and the indication field indicates to stop the PDCCH monitoring at least within the current DRX on duration.

12. The method according to claim 10 or 11, wherein in the case that the first indication information indicates to stop the PDCCH monitoring at least within the current DRX on duration, the first DCI and PDSCH are not transmitted in a same TTI, or
the indication information indicates to stop the PDCCH monitoring at least within the current DRX on duration, and the first DCI and the non-physical layer signaling used to indicate to stop the PDCCH monitoring at least within the current DRX on duration are transmitted in the same TTI, or the first DCI and the non-physical layer signaling are not transmitted in the same TTI.

13. The method of claim 12, wherein the performing responding (302), by the network device, according to the first indication information includes:
if the network device receives the ACK or the NACK fed back by the terminal and an effective time of the first DCI is earlier than an effective time of the non-physical layer signaling, stopping PDCCH transmission for the terminal at least within the current DRX on duration according to the first DCI; or
if the network device receives the ACK corresponding to a non-physical layer signaling fed back by the terminal, not performing PDCCH transmission for the terminal at least within the current DRX on duration according to the first DCI, and stopping sending the non-physical layer signaling.

14. The method according to claim 10 or 11, further comprising:
if the network device does not detect Hybrid Automatic Repeat Request Acknowledge, HARQ-ACK, sending a third DCI to the terminal, wherein the third DCI includes third indication information, and the third indication information indicates the terminal not to perform the PDCCH monitoring for subsequent W monitoring opportunities, or indicates to perform the PDCCH monitoring at the next monitoring opportunity, or indicates to stop the PDCCH monitoring at least within the current DRX on duration, and the W is an integer greater than or equal to 1;
or,
in the case that the first DCI indicates the terminal not to perform the PDCCH monitoring for the subsequent N monitoring opportunities, or the first DCI indicates to stop the PDCCH monitoring at least within the current DRX on duration, and the first DCI and the PDSCH are transmitted within the same TTI, the method further comprises:
if the network device detects an NACK corresponding to the PDSCH, stopping, by the network device, downlink transmission of the terminal.

15. The method according to claim 10 or 11, wherein the value of N is configured statically, semi-statically or dynamically by the network device.

16. A terminal, comprising:
a first receiving module (601), configured to receive a first DCI sent by a network device, wherein the first DCI includes first indication information, and the first indication information indicates the terminal not to perform physical downlink control channel, PDCCH, monitoring for subsequent N monitoring opportunities, or indicates the terminal to perform the PDCCH monitoring at a next monitoring opportunity, or indicates the terminal to stop the PDCCH monitoring at least within a current Discontinuous Reception, DRX, on duration, wherein N is an integer greater than or equal to 1;
a responding module (602), configured to, if the first DCI is decoded successfully, perform responding, by the terminal, according to the first indication information,
wherein the first indication information includes a monitoring status field, and the monitoring status field is indicated by one bit or two bits;
the monitoring status field corresponds to three states and indicates one of the three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or
the monitoring status field corresponds to two states and indicates one of the two states, and the two states include: a first state where the PDCCH monitoring is not performed for the subsequent N monitoring opportunities and a second state where the PDCCH monitoring is performed at the next monitoring opportunity.

17. A network device, comprising:
a first sending module (901), configured to send a first DCI to a terminal, wherein the first DCI includes first indication information, and the first indication information indicates the terminal not to perform PDCCH monitoring for subsequent N monitoring opportunities, or indicates the terminal to perform the PDCCH monitoring at a next monitoring opportunity, or indicates to stop the PDCCH monitoring at least within a current DRX on duration, wherein N is an integer greater than or equal to 1;
a responding module (902), configured to, if the network device receives an ACK or an NACK fed back by the terminal, performing responding, by the network device, according to the first indication information,
wherein the first indication information includes a monitoring status field, and the monitoring status field is indicated by one bit or two bits;
the monitoring status field corresponds to three states and indicates one of the three states, the three states include: a first state where the PDCCH monitoring is not performed for the subsequent N monitoring opportunities, and a second state where the PDCCH monitoring is performed at the next monitoring opportunity and a third state where the PDCCH monitoring is stopped at least within the current DRX on duration; or
the monitoring status field corresponds to two states and indicates one of the two states, and the two states include: a first state where the PDCCH monitoring is not performed for the subsequent N monitoring opportunities and a second state where the PDCCH monitoring is performed at the next monitoring opportunity.

## Patentansprüche

1. Downlink-Steuerinformationsübertragungsverfahren, DCI-Übertragungsverfahren, umfassend:
Empfangen (201), durch ein Endgerät, einer von einer Netzwerkvorrichtung gesendeten ersten DCI, wobei die erste DCI erste Anzeigeinformationen einschließt, und die ersten Anzeigeinformationen dem Endgerät anzeigen, keine Überwachung eines physikalischen Downlink-Steuerkanals, PDCCH, für nachfolgende N Überwachungsgelegenheiten durchzuführen, oder dem Endgerät anzeigen, die PDCCH-Überwachung bei einer nächsten Überwachungsgelegenheit durchzuführen, oder dem Endgerät anzeigen, die PDCCH-Überwachung mindestens innerhalb einer aktuellen diskontinuierlichen Empfangsdauer, DRX-Einschaltdauer, zu stoppen, wobei N eine ganze Zahl größer oder gleich 1 ist; und
falls die erste DCI erfolgreich dekodiert wird, Durchführen einer Antwort (202) durch das Endgerät gemäß der ersten Anzeigeinformation,
wobei die ersten Anzeigeinformationen ein Überwachungsstatusfeld einschließen, und das Überwachungsstatusfeld durch ein Bit oder zwei Bits angezeigt wird;
das Überwachungsstatusfeld drei Zuständen entspricht und einen der drei Zustände anzeigt , wobei die drei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird, und einen dritten Zustand, in dem die PDCCH-Überwachung mindestens innerhalb der aktuellen DRX-Einschaltdauer gestoppt wird; oder
das Überwachungsstatusfeld zwei Zuständen entspricht und einen der zwei Zustände anzeigt, und die zwei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird.

2. Verfahren nach Anspruch 1, wobei die ersten Anzeigeinformationen ein Anzeigefeld einschließen, und das Anzeigefeld anzeigt, die PDCCH-Überwachung mindestens innerhalb der aktuellen DRX-Einschaltdauer zu stoppen.

3. Verfahren nach Anspruch 1 oder 2, wobei in dem Fall, dass die erste Anzeigeinformation anzeigt, die PDCCH-Überwachung mindestens innerhalb der aktuellen DRX-Einschaltdauer zu stoppen, die erste DCI und ein physikalischer gemeinsam genutzter Downlink-Kanal, PDSCH, nicht in demselben Übertragungszeitintervall, TTI, übertragen werden, oder
die Anzeigeinformation anzeigt, die PDCCH-Überwachung mindestens innerhalb der aktuellen DRX-Einschaltdauer zu stoppen, und die erste DCI und eine Signalisierung auf höheren Schichten, die verwendet wird, um anzuzeigen, die PDCCH-Überwachung mindestens innerhalb der aktuellen DRX-Einschaltdauer zu stoppen, in demselben TTI übertragen werden, oder die erste DCI und die Signalisierung auf höheren Schichten nicht in demselben TTI übertragen werden.

4. Verfahren nach Anspruch 3, wobei, falls die erste DCI erfolgreich dekodiert wird, das Durchführen des Antwortens (202) durch das Endgerät gemäß der ersten Anzeigeinformation umfasst:
falls die erste DCI erfolgreich dekodiert wird und eine Wirksamkeitszeit der ersten DCI früher ist als eine Wirksamkeitszeit der Signalisierung auf höheren Schichten, Stoppen der PDCCH-Überwachung mindestens innerhalb der aktuellen DRX-Einschaltdauer gemäß der ersten DCI; oder
falls die erste DCI erfolgreich dekodiert wird, Rückmelden, durch das Endgerät, einer ACK entsprechend der Signalisierung auf höheren Schichten an die Netzwerkvorrichtung und Stoppen der PDCCH-Überwachung mindestens innerhalb der aktuellen DRX-Einschaltdauer gemäß der ersten DCI.

5. Verfahren nach Anspruch 3, ferner umfassend:
in dem Fall, dass die erste DCI und die Signalisierung auf höheren Schichten nicht in derselben TTI übertragen werden, die erste DCI nicht erfolgreich dekodiert wird und die Signalisierung auf höheren Schichten nicht erfolgreich dekodiert wird, falls das Endgerät ein NACK entsprechend der Signalisierung auf höheren Schichten an die Netzwerkvorrichtung zurückgibt, Empfangen, durch das Endgerät, einer zweiten DCI, die von der Netzwerkvorrichtung gesendet wird, wobei die zweite DCI zweite Anzeigeinformationen einschließt, die zweiten Anzeigeinformationen verwendet werden, um dem Endgerät anzuzeigen, die PDCCH-Überwachung für nachfolgende M Überwachungsgelegenheiten nicht durchzuführen, oder verwendet werden, um anzuzeigen, die PDCCH-Überwachung bei der nächsten Überwachungsgelegenheit durchzuführen, oder verwendet werden, um anzuzeigen, die PDCCH-Überwachung mindestens innerhalb der aktuellen DRX-Einschaltdauer zu stoppen, wobei M eine ganze Zahl größer als oder gleich 1 ist.

6. Verfahren nach Anspruch 1 oder 2, ferner umfassend:
falls die erste DCI nicht erfolgreich dekodiert wird, Empfangen, durch das Endgerät, einer dritten DCI, die von der Netzwerkvorrichtung gesendet wird, wobei die dritte DCI dritte Anzeigeinformationen einschließt, und die dritten Anzeigeinformationen verwendet werden, um dem Endgerät anzuzeigen, die PDCCH-Überwachung für nachfolgende W Überwachungsgelegenheiten nicht durchzuführen, oder verwendet werden, um anzuzeigen, die PDCCH-Überwachung bei der nächsten Überwachungsgelegenheit durchzuführen, oder verwendet werden, um anzuzeigen, die PDCCH-Überwachung mindestens innerhalb der aktuellen DRX-Einschaltdauer zu stoppen, wobei W eine ganze Zahl größer oder gleich 1 ist.

7. Verfahren nach Anspruch 6, wobei eine Empfangszeit der dritten DCI vor einer Endposition der N Überwachungsgelegenheiten liegt, die durch die erste DCI angezeigt werden; oder
die Empfangszeit der dritten DCI innerhalb der aktuellen DRX-Einschaltdauer liegt.

8. Verfahren nach Anspruch 1 oder 2, wobei der Wert von N statisch, semi-statisch oder dynamisch durch die Netzwerkvorrichtung konfiguriert wird.

9. Verfahren nach Anspruch 8, wobei in dem Fall, dass das N statisch oder semi-statisch durch die Netzwerkvorrichtung konfiguriert wird, das Endgerät einen spezifischen Wert entsprechend dem N im Voraus erhält, und die ersten Anzeigeinformationen auch verwendet werden, um anzuzeigen, dass der Wert von N der spezifische Wert ist; oder
in einem Fall, dass das N dynamisch durch die Netzwerkvorrichtung konfiguriert wird, erhält das Endgerät eine Vielzahl von Kandidatenwerten entsprechend dem N im Voraus, und die ersten Anzeigeinformationen werden auch verwendet, um anzuzeigen, dass der Wert von N einer der Vielzahl von Kandidatenwerten ist; oder
in dem Fall, dass N dynamisch durch die Netzwerkvorrichtung konfiguriert wird, erhält das Endgerät die Vielzahl von Kandidatenwerten entsprechend N im Voraus, das Endgerät empfängt vierte Anzeigeinformationen, die von der Netzwerkvorrichtung gesendet werden, die vierten Anzeigeinformationen werden verwendet, um einen Zielkandidatenwert unter der Vielzahl von Kandidatenwerten anzuzeigen, und die ersten Anzeigeinformationen werden auch verwendet, um anzuzeigen, dass der Wert von N der Zielkandidatenwert ist.

10. DCI-Übertragungsverfahren, umfassend:
Senden (301), durch eine Netzwerkvorrichtung, einer ersten DCI an ein Endgerät, wobei die erste DCI erste Anzeigeinformationen einschließt, und die ersten Anzeigeinformationen dem Endgerät anzeigen, keine PDCCH-Überwachung für nachfolgende N Überwachungsgelegenheiten durchzuführen, oder dem Endgerät anzeigen, die PDCCH-Überwachung bei einer nächsten Überwachungsgelegenheit durchzuführen, oder dem Endgerät anzeigen, die PDCCH-Überwachung mindestens innerhalb einer aktuellen DRX-Einschaltdauer zu stoppen, wobei N eine ganze Zahl größer oder gleich 1 ist;
falls die Netzwerkvorrichtung eine von dem Endgerät zurückgemeldete ACK oder eine NACK empfängt, Durchführen einer Antwort (302) durch die Netzwerkvorrichtung gemäß der ersten Anzeigeinformation,
wobei die ersten Anzeigeinformationen ein Überwachungsstatusfeld einschließen, und das Überwachungsstatusfeld durch ein Bit oder zwei Bits angezeigt wird;
das Überwachungsstatusfeld drei Zuständen entspricht und einen der drei Zustände anzeigt , wobei die drei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird, und einen dritten Zustand, in dem die PDCCH-Überwachung mindestens innerhalb der aktuellen DRX-Einschaltdauer gestoppt wird; oder
das Überwachungsstatusfeld zwei Zuständen entspricht und einen der zwei Zustände anzeigt, und die zwei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird.

11. Verfahren nach Anspruch 10, wobei die erste Anzeigeinformation ein Anzeigefeld einschließt, und das Anzeigefeld anzeigt, die PDCCH-Überwachung mindestens innerhalb der aktuellen DRX-Einschaltdauer zu stoppen.

12. Verfahren nach Anspruch 10 oder 11, wobei in dem Fall, dass die erste Anzeigeinformation anzeigt, die PDCCH-Überwachung mindestens innerhalb der aktuellen DRX-Einschaltdauer zu stoppen, die erste DCI und der PDSCH nicht in demselben TTI übertragen werden, oder
die Anzeigeinformation anzeigt, die PDCCH-Überwachung mindestens innerhalb der aktuellen DRX-Einschaltdauer zu stoppen, und die erste DCI und die Signalisierung auf höheren Schichten, die verwendet wird, um anzuzeigen, die PDCCH-Überwachung mindestens innerhalb der aktuellen DRX-Einschaltdauer zu stoppen, in demselben TTI übertragen werden, oder die erste DCI und die Signalisierung auf höheren Schichten nicht in demselben TTI übertragen werden.

13. Verfahren nach Anspruch 12, wobei das Durchführen des Antwortens (302) durch die Netzwerkvorrichtung gemäß der ersten Anzeigeinformation einschließt:
falls die Netzwerkvorrichtung die von dem Endgerät zurückgemeldete ACK oder die NACK empfängt und eine Wirksamkeitszeit der ersten DCI früher ist als eine Wirksamkeitszeit der Signalisierung auf höheren Schichten, Stoppen der PDCCH-Übertragung für das Endgerät mindestens innerhalb der aktuellen DRX-Einschaltdauer gemäß der ersten DCI; oder
falls die Netzwerkvorrichtung die ACK entsprechend einer von dem Endgerät zurückgemeldeten Signalisierung auf höheren Schichten empfängt, kein Durchführen der PDCCH-Übertragung für das Endgerät mindestens innerhalb der aktuellen DRX-Einschaltdauer gemäß der ersten DCI und Stoppen des Sendens der Signalisierung auf höheren Schichten.

14. Verfahren nach Anspruch 10 oder 11, ferner umfassend:
falls die Netzwerkvorrichtung keine Hybrid Automatic Repeat Request Acknowledge, HARQ-ACK, detektiert, Senden einer dritten DCI an das Endgerät, wobei die dritte DCI dritte Anzeigeinformationen einschließt, und die dritten Anzeigeinformationen dem Endgerät anzeigen, die PDCCH-Überwachung für nachfolgende W Überwachungsgelegenheiten nicht durchzuführen, oder anzeigen, die PDCCH-Überwachung bei der nächsten Überwachungsgelegenheit durchzuführen, oder anzeigen, die PDCCH-Überwachung mindestens innerhalb der aktuellen DRX-Einschaltdauer zu stoppen, und das W eine ganze Zahl größer oder gleich 1 ist;
oder
in dem Fall, dass die erste DCI dem Endgerät anzeigt, die PDCCH-Überwachung für die nachfolgenden N Überwachungsgelegenheiten nicht durchzuführen, oder die erste DCI anzeigt, die PDCCH-Überwachung mindestens innerhalb der aktuellen DRX-Einschaltdauer zu stoppen, und die erste DCI und der PDSCH innerhalb derselben TTI übertragen werden, umfasst das Verfahren ferner:
falls die Netzwerkvorrichtung ein NACK entsprechend dem PDSCH detektiert, Stoppen, durch die Netzwerkvorrichtung, der Downlink-Übertragung des Endgeräts.

15. Verfahren nach Anspruch 10 oder 11, wobei der Wert von N statisch, semi-statisch oder dynamisch durch die Netzwerkvorrichtung konfiguriert wird.

16. Endgerät, umfassend:
ein erstes Empfangsmodul (601), das konfiguriert ist, um eine erste DCI zu empfangen, die von einer Netzwerkvorrichtung gesendet wird, wobei die erste DCI erste Anzeigeinformationen einschließt, und die ersten Anzeigeinformationen dem Endgerät anzeigen, keine Überwachung eines physikalischen Downlink-Steuerkanals, PDCCH, für nachfolgende N Überwachungsgelegenheiten durchzuführen, oder dem Endgerät anzeigen, die PDCCH-Überwachung bei einer nächsten Überwachungsgelegenheit durchzuführen, oder dem Endgerät anzeigen, die PDCCH-Überwachung mindestens innerhalb einer aktuellen diskontinuierlichen Empfangsdauer, DRX-Einschaltdauer, zu stoppen, wobei N eine ganze Zahl größer oder gleich 1 ist;
ein Antwortmodul (602), das konfiguriert ist, um, falls die erste DCI erfolgreich dekodiert wird, ein Antworten durch das Endgerät gemäß der ersten Anzeigeinformation durchzuführen,
wobei die ersten Anzeigeinformationen ein Überwachungsstatusfeld einschließen, und das Überwachungsstatusfeld durch ein Bit oder zwei Bits angezeigt wird;
das Überwachungsstatusfeld drei Zuständen entspricht und einen der drei Zustände anzeigt , wobei die drei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird, und einen dritten Zustand, in dem die PDCCH-Überwachung mindestens innerhalb der aktuellen DRX-Einschaltdauer gestoppt wird; oder
das Überwachungsstatusfeld zwei Zuständen entspricht und einen der zwei Zustände anzeigt, und die zwei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird.

17. Netzwerkvorrichtung, umfassend:
ein erstes Sendemodul (901), das konfiguriert ist, um eine erste DCI an ein Endgerät zu senden, wobei die erste DCI erste Anzeigeinformationen einschließt, und die ersten Anzeigeinformationen dem Endgerät anzeigen, keine PDCCH-Überwachung für nachfolgende N Überwachungsgelegenheiten durchzuführen, oder dem Endgerät anzeigen, die PDCCH-Überwachung bei einer nächsten Überwachungsgelegenheit durchzuführen, oder anzeigen, die PDCCH-Überwachung mindestens innerhalb einer aktuellen DRX-Einschaltdauer zu stoppen, wobei N eine ganze Zahl größer oder gleich 1 ist;
ein Antwortmodul (902), das konfiguriert ist, um, falls die Netzwerkvorrichtung ein ACK oder ein NACK, das von dem Endgerät zurückgemeldet wird, empfängt, ein Antworten durch die Netzwerkvorrichtung gemäß der ersten Anzeigeinformation durchzuführen,
wobei die ersten Anzeigeinformationen ein Überwachungsstatusfeld einschließen, und das Überwachungsstatusfeld durch ein Bit oder zwei Bits angezeigt wird;
das Überwachungsstatusfeld drei Zuständen entspricht und einen der drei Zustände anzeigt , wobei die drei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird, und einen dritten Zustand, in dem die PDCCH-Überwachung mindestens innerhalb der aktuellen DRX-Einschaltdauer gestoppt wird; oder
das Überwachungsstatusfeld zwei Zuständen entspricht und einen der zwei Zustände anzeigt, und die zwei Zustände einschließen: einen ersten Zustand, in dem die PDCCH-Überwachung für die nachfolgenden N Überwachungsgelegenheiten nicht durchgeführt wird, und einen zweiten Zustand, in dem die PDCCH-Überwachung bei der nächsten Überwachungsgelegenheit durchgeführt wird.

## Revendications

1. Procédé de transmission d'informations de commande de liaison descendante, DCI, comprenant :
la réception (201), par un terminal, de premières DCI envoyées par un dispositif de réseau, dans lequel les premières DCI comportent de premières informations d'indication, et les premières informations d'indication indiquent au terminal de ne pas réaliser de surveillance de canal de commande de liaison descendante physique, PDCCH, pour N opportunités de surveillance suivantes, ou indiquent au terminal de réaliser la surveillance de PDCCH lors d'une prochaine opportunité de surveillance, ou indiquent au terminal d'arrêter la surveillance de PDCCH au moins pendant une durée d'activation de réception discontinue, DRX, actuelle, dans lequel N est un nombre entier supérieur ou égal à 1 ; et
si les premières DCI sont décodées avec succès, la réalisation de la réponse (202), par le terminal, selon les premières informations d'indication,
dans lequel les premières informations d'indication comportent un champ d'état de surveillance, et le champ d'état de surveillance est indiqué par un bit ou deux bits ;
le champ d'état de surveillance correspond à trois états et indique l'un des trois états, les trois états comportent : un premier état où la surveillance de PDCCH n'est pas réalisée pour les N opportunités de surveillance suivantes, et un deuxième état où la surveillance de PDCCH est réalisée lors de la prochaine opportunité de surveillance et un troisième état où la surveillance de PDCCH est arrêtée au moins pendant la durée d'activation de DRX actuelle ; ou
le champ d'état de surveillance correspond à deux états et indique l'un des deux états, et les deux états comportent : un premier état où la surveillance de PDCCH n'est pas réalisée pour les N opportunités de surveillance suivantes et un deuxième état où la surveillance de PDCCH est réalisée lors de la prochaine opportunité de surveillance.

2. Procédé selon la revendication 1, dans lequel les premières informations d'indication comportent un champ d'indication, et le champ d'indication indique d'arrêter la surveillance de PDCCH au moins pendant la durée d'activation de DRX actuelle.

3. Procédé selon la revendication 1 ou 2, dans lequel dans le cas où les premières informations d'indication indiquent d'arrêter la surveillance de PDCCH au moins pendant la durée d'activation de DRX actuelle, les premières DCI et un canal partagé de liaison descendante physique, PDSCH, ne sont pas transmis dans un même intervalle de temps de transmission, TTI, ou
les informations d'indication indiquent d'arrêter la surveillance de PDCCH au moins pendant la durée d'activation de DRX actuelle, et les premières DCI et une signalisation de couche non physique utilisée pour indiquer d'arrêter la surveillance de PDCCH au moins pendant la durée d'activation de DRX actuelle sont transmises dans le même TTI, ou les premières DCI et la signalisation de couche non physique ne sont pas transmises dans le même TTI.

4. Procédé selon la revendication 3, dans lequel, si les premières DCI sont décodées avec succès, la réalisation de la réponse (202), par le terminal, selon les premières informations d'indication comprend :
si les premières DCI sont décodées avec succès, et qu'un moment effectif des premières DCI est antérieur à un moment effectif de la signalisation de couche non physique, l'arrêt de la surveillance de PDCCH au moins pendant la durée d'activation de DRX actuelle selon les premières DCI ; ou
si les premières DCI sont décodées avec succès, le renvoi, par le terminal, d'un ACK correspondant à la signalisation de couche non physique au dispositif de réseau, et l'arrêt de la surveillance de PDCCH au moins pendant la durée d'activation de DRX actuelle selon les premières DCI.

5. Procédé selon la revendication 3, comprenant en outre :
dans le cas où les premières DCI et la signalisation de couche non physique ne sont pas transmises dans le même TTI, les premières DCI ne sont pas décodées avec succès, et la signalisation de couche non physique n'est pas décodée avec succès, si le terminal renvoie un NACK correspondant à la signalisation de couche non physique au dispositif de réseau, la réception, par le terminal, de deuxièmes DCI envoyées par le dispositif de réseau, dans lequel les deuxièmes DCI comportent de deuxièmes informations d'indication, les deuxièmes informations d'indication sont utilisées pour indiquer au terminal de ne pas réaliser la surveillance de PDCCH pour M opportunités de surveillance suivantes, ou sont utilisées pour indiquer de réaliser la surveillance de PDCCH lors de la prochaine opportunité de surveillance, ou sont utilisées pour indiquer d'arrêter la surveillance de PDCCH au moins pendant la durée d'activation de DRX actuelle, dans lequel M est un nombre entier supérieur ou égal à 1.

6. Procédé selon la revendication 1 ou 2, comprenant en outre :
si les premières DCI ne sont pas décodées avec succès, la réception, par le terminal, de troisièmes DCI envoyées par le dispositif de réseau, dans lequel les troisièmes DCI comportent de troisièmes informations d'indication, et les troisièmes informations d'indication sont utilisées pour indiquer au terminal de ne pas réaliser la surveillance de PDCCH pour W opportunités de surveillance suivantes, ou utilisées pour indiquer de réaliser la surveillance de PDCCH lors de la prochaine opportunité de surveillance, ou utilisées pour indiquer d'arrêter la surveillance de PDCCH au moins pendant la durée d'activation de DRX actuelle, dans lequel W est un nombre entier supérieur ou égal à 1.

7. Procédé selon la revendication 6, dans lequel un temps de réception des troisièmes DCI est antérieur à une position finale des N opportunités de surveillance indiquées par les premières DCI ; ou
le temps de réception des troisièmes DCI se situe dans la durée d'activation de DRX actuelle.

8. Procédé selon la revendication 1 ou 2, dans lequel la valeur de N est configurée de manière statique, semi-statique ou dynamique par le dispositif de réseau.

9. Procédé selon la revendication 8, dans lequel, dans le cas où le N est configuré de manière statique ou semi-statique par le dispositif de réseau, le terminal obtient à l'avance une valeur spécifique correspondant au N, et les premières informations d'indication sont également utilisées pour indiquer que la valeur de N est la valeur spécifique ; ou
dans un cas où le N est configuré dynamiquement par le dispositif de réseau, le terminal obtient à l'avance une pluralité de valeurs candidates correspondant au N, et les premières informations d'indication sont également utilisées pour indiquer que la valeur de N est l'une de la pluralité de valeurs candidates ; ou
dans le cas où N est configuré dynamiquement par le dispositif de réseau, le terminal obtient à l'avance la pluralité de valeurs candidates correspondant à N, le terminal reçoit de quatrièmes informations d'indication envoyées par le dispositif de réseau, les quatrièmes informations d'indication sont utilisées pour indiquer une valeur candidate cible parmi la pluralité de valeurs candidates, et les premières informations d'indication sont également utilisées pour indiquer que la valeur de N est la valeur candidate cible.

10. Procédé de transmission de DCI, comprenant :
l'envoi (301), par un dispositif de réseau, de premières DCI à un terminal, dans lequel les premières DCI comportent de premières informations d'indication, et les premières informations d'indication indiquent au terminal de ne pas réaliser de surveillance de PDCCH pour N opportunités de surveillance suivantes, ou indiquent au terminal de réaliser la surveillance de PDCCH lors d'une prochaine opportunité de surveillance, ou indiquent au terminal d'arrêter la surveillance de PDCCH au moins pendant une durée d'activation de DRX actuelle, dans lequel N est un nombre entier supérieur ou égal à 1 ;
si le dispositif de réseau reçoit un ACK ou un NACK renvoyé par le terminal, la réalisation de la réponse (302), par le dispositif de réseau, selon les premières informations d'indication,
dans lequel les premières informations d'indication comportent un champ d'état de surveillance, et le champ d'état de surveillance est indiqué par un bit ou deux bits ;
le champ d'état de surveillance correspond à trois états et indique l'un des trois états, les trois états comportent : un premier état où la surveillance de PDCCH n'est pas réalisée pour les N opportunités de surveillance suivantes, et un deuxième état où la surveillance de PDCCH est réalisée lors de la prochaine opportunité de surveillance et un troisième état où la surveillance de PDCCH est arrêtée au moins pendant la durée d'activation de DRX actuelle ; ou
le champ d'état de surveillance correspond à deux états et indique l'un des deux états, et les deux états comportent : un premier état où la surveillance de PDCCH n'est pas réalisée pour les N opportunités de surveillance suivantes et un deuxième état où la surveillance de PDCCH est réalisée lors de la prochaine opportunité de surveillance.

11. Procédé selon la revendication 10, dans lequel les premières informations d'indication comportent un champ d'indication, et le champ d'indication indique d'arrêter la surveillance de PDCCH au moins pendant la durée d'activation de DRX actuelle.

12. Procédé selon la revendication 10 ou 11, dans lequel, dans le cas où les premières informations d'indication indiquent d'arrêter la surveillance de PDCCH au moins pendant la durée d'activation de DRX actuelle, les premières DCI et le PDSCH ne sont pas transmis dans un même TTI, ou
les informations d'indication indiquent d'arrêter la surveillance de PDCCH au moins pendant la durée d'activation de DRX actuelle, et les premières DCI et la signalisation de couche non physique utilisée pour indiquer d'arrêter la surveillance de PDCCH au moins pendant la durée d'activation de DRX actuelle sont transmises dans le même TTI, ou les premières DCI et la signalisation de couche non physique ne sont pas transmises dans le même TTI.

13. Procédé selon la revendication 12, dans lequel la réalisation de la réponse (302), par le dispositif de réseau, selon les premières informations d'indication comporte :
si le dispositif de réseau reçoit l'ACK ou le NACK renvoyé par le terminal et qu'un moment effectif des premières DCI est antérieur à un moment effectif de la signalisation de couche non physique, l'arrêt de la transmission de PDCCH pour le terminal au moins pendant la durée d'activation de DRX actuelle selon les premières DCI ; ou
si le dispositif de réseau reçoit l'ACK correspondant à une signalisation de couche non physique renvoyée par le terminal, le fait de ne pas réaliser la transmission du PDCCH pour le terminal au moins pendant la durée d'activation de DRX actuelle selon les premières DCI, et l'arrêt de l'envoi de la signalisation de couche non physique.

14. Procédé selon la revendication 10 ou 11, comprenant en outre :
si le dispositif de réseau ne détecte pas d'accusé de réception de demande de répétition automatique hybride, HARQ-ACK, l'envoi de troisièmes DCI au terminal, dans lequel les troisièmes DCI comportent de troisièmes informations d'indication, et les troisièmes informations d'indication indiquent au terminal de ne pas réaliser la surveillance de PDCCH pour les W opportunités de surveillance suivantes, ou indiquent de réaliser la surveillance de PDCCH lors de la prochaine opportunité de surveillance, ou indiquent d'arrêter la surveillance de PDCCH au moins pendant la durée d'activation de DRX actuelle, et le W est un nombre entier supérieur ou égal à 1 ;
ou,
dans le cas où les premières DCI indiquent au terminal de ne pas réaliser la surveillance de PDCCH pour les N opportunités de surveillance suivantes, ou les premières DCI indiquent d'arrêter la surveillance de PDCCH au moins pendant la durée d'activation de DRX actuelle, et les premières DCI et le PDSCH sont transmis dans le même TTI, le procédé comprend en outre :
si le dispositif de réseau détecte un NACK correspondant au PDSCH, l'arrêt, par le dispositif de réseau, de la transmission de liaison descendante du terminal.

15. Procédé selon la revendication 10 ou 11, dans lequel la valeur de N est configurée de manière statique, semi-statique ou dynamique par le dispositif de réseau.

16. Terminal, comprenant :
un premier module de réception (601), configuré pour recevoir de premières DCI envoyées par un dispositif de réseau, dans lequel les premières DCI comportent de premières informations d'indication, et les premières informations d'indication indiquent que le terminal ne doit pas réaliser de surveillance de canal de commande de liaison descendante physique, PDCCH, pour N opportunités de surveillance suivantes, ou indiquent au terminal de réaliser la surveillance de PDCCH lors d'une prochaine opportunité de surveillance, ou indiquent au terminal d'arrêter la surveillance de PDCCH au moins pendant une durée d'activation de réception discontinue, DRX, actuelle, dans lequel N est un nombre entier supérieur ou égal à 1 ;
un module de réponse (602), configuré pour, si les premières DCI sont décodées avec succès, réaliser la réponse, par le terminal, selon les premières informations d'indication,
dans lequel les premières informations d'indication comportent un champ d'état de surveillance, et le champ d'état de surveillance est indiqué par un bit ou deux bits ;
le champ d'état de surveillance correspond à trois états et indique l'un des trois états, les trois états comportent : un premier état où la surveillance de PDCCH n'est pas réalisée pour les N opportunités de surveillance suivantes, et un deuxième état où la surveillance de PDCCH est réalisée lors de la prochaine opportunité de surveillance et un troisième état où la surveillance de PDCCH est arrêtée au moins pendant la durée d'activation de DRX actuelle ; ou
le champ d'état de surveillance correspond à deux états et indique l'un des deux états, et les deux états comportent : un premier état où la surveillance de PDCCH n'est pas réalisée pour les N opportunités de surveillance suivantes et un deuxième état où la surveillance de PDCCH est réalisée lors de la prochaine opportunité de surveillance.

17. Dispositif réseau, comprenant :
un premier module d'envoi (901), configuré pour envoyer de premières DCI à un terminal, dans lequel les premières DCI comportent de premières informations d'indication, et les premières informations d'indication indiquent au terminal de ne pas réaliser de surveillance de PDCCH pour N opportunités de surveillance suivantes, ou indiquent au terminal de réaliser la surveillance de PDCCH lors d'une prochaine opportunité de surveillance, ou indiquent d'arrêter la surveillance de PDCCH au moins pendant une durée d'activation de DRX actuelle, dans lequel N est un nombre entier supérieur ou égal à 1 ;
un module de réponse (902), configuré pour, si le dispositif de réseau reçoit un ACK ou un NACK renvoyé par le terminal, réaliser la réponse, par le dispositif de réseau, selon les premières informations d'indication,
dans lequel les premières informations d'indication comportent un champ d'état de surveillance, et le champ d'état de surveillance est indiqué par un bit ou deux bits ;
le champ d'état de surveillance correspond à trois états et indique l'un des trois états, les trois états comportent : un premier état où la surveillance de PDCCH n'est pas réalisée pour les N opportunités de surveillance suivantes, et un deuxième état où la surveillance de PDCCH est réalisée lors de la prochaine opportunité de surveillance et un troisième état où la surveillance de PDCCH est arrêtée au moins pendant la durée d'activation de DRX actuelle ; ou
le champ d'état de surveillance correspond à deux états et indique l'un des deux états, et les deux états comportent : un premier état où la surveillance de PDCCH n'est pas réalisée pour les N opportunités de surveillance suivantes et un deuxième état où la surveillance de PDCCH est réalisée lors de la prochaine opportunité de surveillance.
